(19) **Europäisches Patentamt**
**European Patent Office**
**Office européen des brevets**

(11) **EP 3 540 937 A1**

(12) **EUROPEAN PATENT APPLICATION**
published in accordance with Art. 153(4) EPC

(43) Date of publication:
**18.09.2019 Bulletin 2019/38**

(21) Application number: **17868962.6**

(22) Date of filing: **08.11.2017**

(51) Int Cl.:
$H02P\ 29/64^{(2016.01)}$    $B62D\ 5/04^{(2006.01)}$
$B62D\ 6/00^{(2006.01)}$    $H02P\ 25/22^{(2006.01)}$
$H02P\ 27/08^{(2006.01)}$    $H02P\ 29/028^{(2016.01)}$
$H02P\ 29/68^{(2016.01)}$

(86) International application number:
**PCT/JP2017/040264**

(87) International publication number:
**WO 2018/088432 (17.05.2018 Gazette 2018/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.11.2016 JP 2016219382**
**31.01.2017 JP 2017015813**
**20.02.2017 JP 2017028866**

(71) Applicant: **NSK Ltd.**
**Tokyo 141-8560 (JP)**

(72) Inventors:
• **TSUBAKI Takahiro**
**Maebashi-Shi**
**Gunma 371-8527 (JP)**

• **MIURA Tomohiro**
**Maebashi-Shi**
**Gunma 371-8527 (JP)**
• **SUNAGA Takashi**
**Tokyo 141-8560 (JP)**
• **KOGURE Nobuaki**
**Maebashi-Shi**
**Gunma 371-8527 (JP)**
• **KAMIGUCHI Haruhiko**
**Maebashi-Shi**
**Gunma 371-8527 (JP)**

(74) Representative: **Hoffmann Eitle**
**Patent- und Rechtsanwälte PartmbB**
**Arabellastraße 30**
**81925 München (DE)**

(54) **ELECTRIC POWER STEERING DEVICE**

(57)    [Problem]
An object of the present invention is to provide an electric power steering apparatus that enables more precise estimation of a coil temperature for a poly-phase motor by considering a heat transfer phenomenon between a control substrate and a coil in addition to a heat transfer phenomenon between the coils.
[Means for solving the problem]
An electric power steering apparatus that comprises a control substrate that controls a poly-phase motor having two-system motor windings, comprises a temperature sensor that detects a substrate temperature of the control substrate, and a coil temperature estimating section that estimates all coil temperatures by all motor currents of the poly-phase motor and the substrate temperature based on a heat transfer phenomenon between all coils that is caused by a difference in temperature between the all coils and a heat transfer phenomenon between the coil and the control substrate.

FIG.6

**Description**

Technical Field

The present invention relates to an electric power steering apparatus that has a function to estimate a coil temperature of a poly-phase motor, and in particular to an electric power steering apparatus that is capable of estimating a coil temperature considering a heat transfer phenomenon between respective phases which is caused by a difference in temperature between coils of the respective phases and a heat transfer phenomenon between the coil and a control substrate.

Background Art

An electric power steering apparatus (EPS) which provides a steering system of a vehicle with a steering assist torque (an assist torque) by means of a rotational torque of a motor, applies a motor driving force as the steering assist torque to a steering shaft or a rack shaft by means of a transmission mechanism such as gears or a belt through a reduction mechanism, and performs assist control. In order to accurately generate the assist torque, such a conventional electric power steering apparatus performs feedback control of a motor current. The feedback control adjusts a voltage supplied to the motor so that a difference between a steering assist command value (a current command value) and a detected motor current value becomes small, and the adjustment of the voltage supplied to the motor is generally performed by an adjustment of a duty ratio of pulse width modulation (PWM) control.

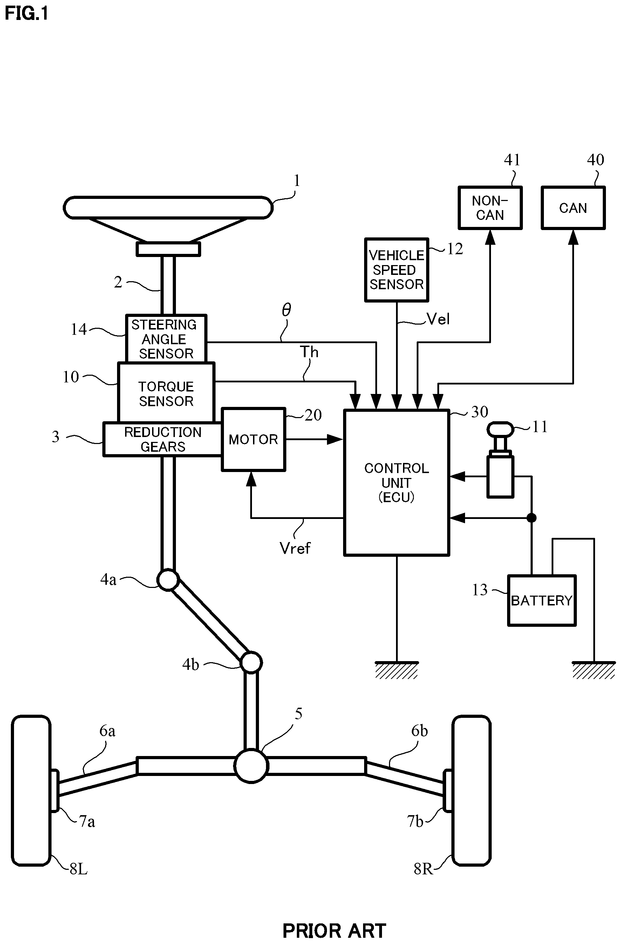

A general configuration of the conventional electric power steering apparatus will be described with reference to FIG. 1. As shown in FIG. 1, a column shaft (a steering shaft, a handle shaft) 2 connected to a steering wheel 1 is connected to steered wheels 8L and 8R through reduction gears (worm gears) 3 constituting the reduction mechanism, universal joints 4a and 4b, a rack and pinion mechanism 5, tie rods 6a and 6b, further via hub units 7a and 7b. In addition, a torsion bar is interposed in the column shaft 2, the column shaft 2 is provided with a steering angle sensor 14 for detecting a steering angel θ of the steering wheel 1 in accordance with a twist angle of the torsion bar and a torque sensor 10 for detecting a steering torque Th, and a motor 20 for assisting the steering force of the steering wheel 1 is connected to the column shaft 2 through the reduction gears 3. Electric power is supplied to a control unit (ECU) 30 for controlling the electric power steering apparatus from a battery 13, and an ignition key signal is inputted into the control unit 30 through an ignition key 11. The control unit 30 calculates a current command value of an assist control command based on the steering torque Th detected by the torque sensor 10 and a vehicle speed Vel detected by a vehicle speed sensor 12, and controls a current supplied to the motor 20 based on a voltage control command value Vref obtained by performing compensation and so on with respect to the current command value.

Further, the steering angle sensor 14 is not indispensable and may not be provided, and it is possible to obtain the steering angle from a rotational angle sensor such as a resolver connected to the motor 20.

A controller area network (CAN) 40 to exchange various information of a vehicle is connected to the control unit 30, and it is also possible to receive the vehicle speed Vel from the CAN 40. Further, it is also possible to connect a non-CAN 41 exchanging a communication, analog/digital signals, a radio wave or the like except with the CAN 40 to the control unit 30.

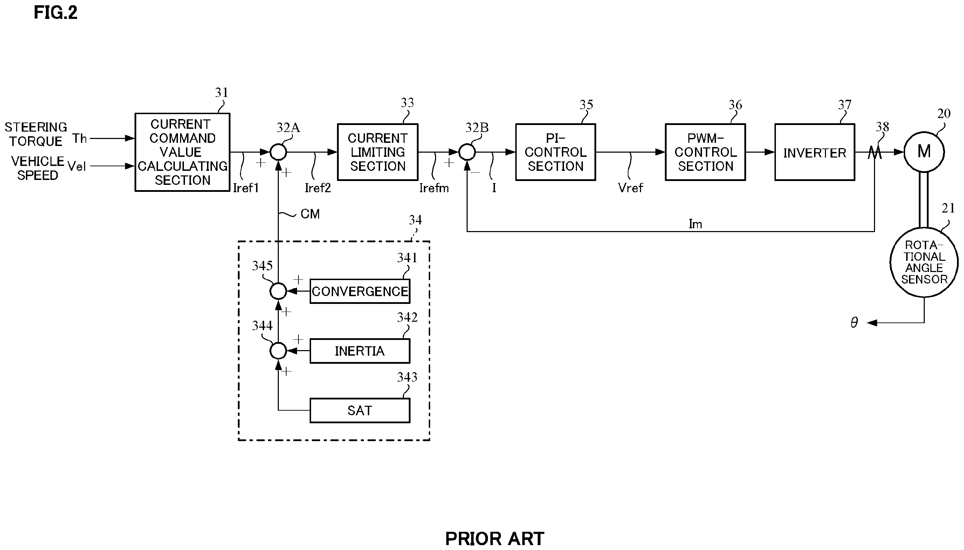

The control unit 30 mainly comprises a CPU (including an MPU, an MCU and so on), and general functions performed by programs within the CPU are shown in FIG. 2.

The control unit 30 will be described with reference to FIG. 2. As shown in FIG. 2, the steering torque Th detected by the torque sensor 10 and the vehicle speed Vel detected by the vehicle speed sensor 12 (or from the CAN 40) are inputted into a current command value calculating section 31 that calculates a current command value Iref1. The current command value calculating section 31 calculates the current command value Iref1 that is a control target value of a current supplied to the motor 20 based on the steering torque Th and the vehicle speed Vel that have been inputted and by means of an assist map or the like. The current command value Iref1 is inputted into a current limiting section 33 through an adding section 32A. A current command value Irefm the maximum current of which is limited is inputted into a subtracting section 32B, and a deviation I (= Irefm - Im) between the current command value Irefm and a motor current value Im being fed back is calculated. The deviation I is inputted into a proportional integral (PI) control section 35 for improving a characteristic of the steering operation. The voltage control command value Vref whose characteristic is improved by the PI-control section 35 is inputted into a PWM-control section 36. Furthermore, the motor 20 is PWM-driven through an inverter 37. The motor current Im of the motor 20 is detected by a motor current detector 38 and is fed back to the subtracting section 32B. The inverter 37 is comprised of a bridge circuit of field effect transistors (FETs) as semiconductor switching elements.

A rotational angle sensor 21 such as a resolver is connected to the motor 20, and a rotational angle θ is detected and outputted by the rotational angle sensor 21.

A compensation signal CM from a compensation signal generating section 34 is added to the adding section 32A, and a characteristic compensation of the steering system is performed by the addition of the compensation signal CM so as to improve a convergence, an inertia characteristic and so on. The compensation signal generating section 34 adds a self-aligning torque (SAT) 343 and an inertia 342 at an adding section 344, further adds the result of addition performed at the adding section 344 with a convergence 341 at an adding section 345, and then outputs the result of addition performed at the adding section 345 as the compensation signal CM.

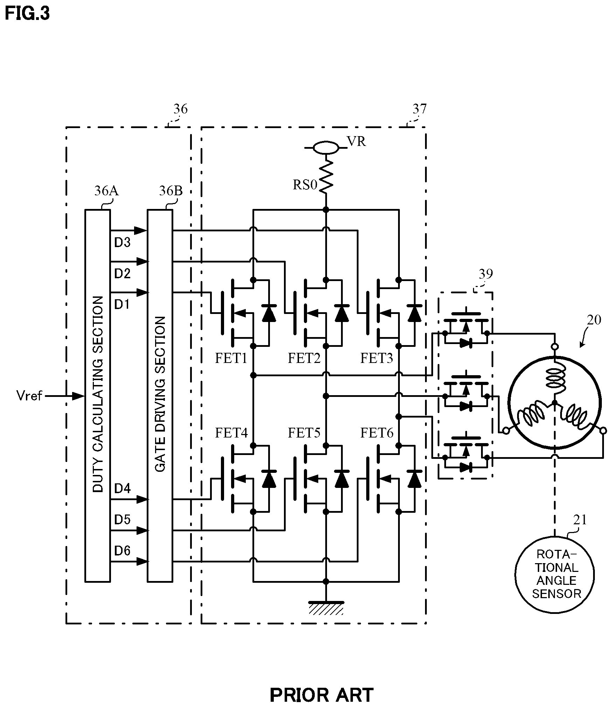

In the case that the motor 20 is a three-phase brushless motor, details of the PWM-control section 36 and the inverter 37 have a configuration as shown in FIG. 3, and the PWM-control section 36 comprises a duty calculating section 36A that calculates PWM duty values D1 to D6 for three phases by using the voltage control command value Vref in accordance with a predetermined expression, and a gate driving section 36B that drives the gates of the FETs serving as driving elements by means of the PWM duty values D1 to D6 and turns the gates on or off with compensating a dead time. The inverter 37 is configured to three-phase bridges of FETs (FET1 to FET6) serving as semiconductor switching elements, and drives the motor 20 by the three-phase bridges of the FETs being made turned on or off by means of the PWM duty values D1 to D6. A motor relay 39 for supplying (ON) or interrupting (OFF) electric power is connected to a power supply line between the inverter 37 and the motor 20 on each phase.

In such an electric power steering apparatus, a large current can flow in a motor in accordance with a steering situation (for example, a case where a steering wheel keeps hitting an end and being locked for a long time in a static steering state). When a coil in the motor (a motor coil) has a high temperature, for example, more than or equal to 180 degrees Celsius, a problem of damage of the coil or the like occurs. Therefore, it is necessary to take measures not to overheat the coil from the viewpoint of safety of a vehicle, and to do so, it is necessary to estimate or measure a temperature of the coil (a coil temperature). However, since it is difficult to measure the coil temperature directly, methods to estimate the coil temperature have been proposed.

For example, the publication of Japanese Patent No.5211618 B2 (Patent Document 1) constructs a temperature estimation model considering a relationship between heat transfer phenomena between poly-phase coils and a motor rotational velocity, and a relationship between a radiation coefficient and the motor rotational velocity, and estimates the coil temperature. Specifically, Patent Document 1 identifies heat transfer coefficients between a coil of any phase in a poly-phase motor and outside air environment and between any phase and another phase in accordance with a change of the motor rotational velocity, and estimates a temperature of a coil of each phase or a magnet in the motor by using a substrate temperature and a current (or a current command value) of each phase. The publication of Japanese Patent No.4483298 B2 (Patent Document 2) estimates a temperature of a motor coil by utilizing that a calorific value of a motor is proportional to an integrated value of a square value of a current passing through the motor coil and that a temperature change of the motor coil affected by radiation (refrigeration) of the motor coil has a relationship of a primary delay function in a practically applicable temperature range (-40 to 180 degrees Celsius). Specifically, Patent Document 2 estimates the temperature of the motor coil by averaging a value obtained by squaring and integrating a value of the current passing through the motor coil, and making the result pass the primary delay function twice.

The List of Prior Art Documents

Patent Documents

Patent Document 1: Japanese Patent No.5211618 B2
Patent Document 2: Japanese Patent No.4483298 B2

Summary of the Invention

Problems to be Solved by the Invention

However, though Patent Document 1 uses a temperature of an ECU as input data considering a heat transfer between respective phase coils, it does not consider a heat transfer between each phase coil and the ECU, so that there is a possibility that an error occurs in an estimated temperature by an influence from the ECU. Since Patent Document 2 does not especially consider the influence from the ECU, there is the possibility that the error occurs in the estimated temperature by the influence from the ECU more than an apparatus in Patent Document 1.

In recent years, a case where a motor having multi-system motor windings is used so as to continue a motor operation even if a failure (including an abnormality) of the motor occurs, is increasing. For examples, with respect to a motor having two-system motor windings, coils of a stator are separated into two systems (a U1 phase to a W1 phase and a U2 phase to a W2 phase), and it is possible to rotate a rotor by the other system even if the failure occurs in one system and to continue an assist control. In such a case, it is desired to continue estimation of the coil temperature as well as the assist control.

The present invention has been developed in view of the above-described circumstances, and an object of the present invention is to provide an electric power steering apparatus that enables more precise estimation of a coil temperature for a poly-phase motor by considering a heat transfer phenomenon between a control substrate and a coil in addition to a heat transfer phenomenon between the coils. Further, in the case that a motor has multi-system motor windings, the object is that the electric power steering apparatus enables estimation of the coil temperature even if an abnormality occurs in one of the systems.

Means for Solving the Problems

The present invention relates to an electric power steering apparatus that comprises a control substrate that controls a poly-phase motor having two-system motor windings, the above-described object of the present invention is achieved by that comprising: a temperature sensor that detects a substrate temperature of the control substrate; and a coil temperature estimating section that estimates all coil temperatures by all motor currents of the poly-phase motor and the substrate temperature based on a heat transfer phenomenon between all coils that is caused by a difference in temperature between the all coils and a heat transfer phenomenon between the coil and the control substrate.

Further, the present invention relates to an electric power steering apparatus that comprises a control substrate that controls a poly-phase motor having multi-system motor windings, the above-described object of the present invention is achieved by that comprising: a temperature sensor that detects a substrate temperature of the control substrate; and a coil temperature estimating section that obtains a coil calorific value of each phase of the poly-phase motor and a substrate calorific value of the control substrate by a motor current of each phase, and estimates a coil temperature of each phase by the coil calorific value, the substrate calorific value and the substrate temperature based on a heat transfer phenomenon between the phases that is caused by a difference in temperature between coils of the phases and a heat transfer phenomenon between the coil and the control substrate; wherein the coil temperature estimating section estimates the coil temperature by a corrected coil calorific value and a corrected substrate calorific value that are obtained by correcting the coil calorific value and the substrate calorific value that are obtained in a normal system, and the substrate temperature, when an abnormality occurs in one of systems.

Further, the present invention relates to an electric power steering apparatus that comprises a control substrate that controls a poly-phase motor, the above-described object of the present invention is achieved by that comprising: a temperature sensor that detects a substrate temperature of the control substrate; and a coil temperature estimating section that estimates a coil temperature of each phase of the poly-phase motor by a motor current of each phase and the substrate temperature based on a first heat transfer phenomenon between the phases that is caused by a difference in temperature between coils of the phases and a second heat transfer phenomenon from the coil to the control substrate.

Effects of the Invention

Since estimating the coil temperature by using the relational expression that is obtained by considering the heat transfer phenomenon between the coil and the control substrate in addition to the heat transfer phenomenon which is caused by the difference in temperature between the coils, the electric power steering apparatus according to the present invention enables more precise estimation of the temperature. Further, in the case that the motor has multi-system motor windings, the electric power steering apparatus simply enables estimation of the coil temperature even if an abnormality occurs in one of the systems because of estimating the coil temperature by correction of the calorific value of the normal system or the like.

Brief Description of the Drawings

In the accompanying drawings:

    FIG. 1 is a configuration diagram illustrating a general outline of an electric power steering apparatus;
    FIG. 2 is a block diagram showing a configuration example of a control unit (ECU) of the electric power steering apparatus;
    FIG. 3 is a diagram showing a configuration example of a motor control section of the electric power steering apparatus;
    FIG. 4 is a sectional view showing a configuration example of a motor being applicable to the present invention;
    FIG. 5 is a schematic diagram showing a winding structure example of the motor being applicable to the present invention;
    FIG. 6 is a block diagram showing a configuration example (a first embodiment) of the present invention;
    FIG. 7 is a sectional view which schematically shows a side obtained by cutting a configuration of the motor with a virtual plane including a central axis;

FIG. 8 is a bottom view of a power circuit substrate;

FIG. 9 is a block diagram showing a configuration example of a current control section;

FIGs. 10A and 10B are block diagrams showing a configuration example of a motor driving section and a motor current cut-off circuit;

FIG. 11 is a block diagram showing a configuration example (the first embodiment) of a coil temperature estimating section;

FIG. 12 is a block diagram showing a configuration example (the first embodiment) of a coil temperature calculating section;

FIG. 13 is a flowchart showing a part of an operating example (the first embodiment) of the present invention;

FIG. 14 is a flowchart showing an operating example (the first embodiment) of calculation of a voltage command value;

FIG. 15 is a flowchart showing an operating example (the first embodiment) of estimation of a coil temperature;

FIG. 16 is a block diagram showing a configuration example (a second embodiment) of the coil temperature calculating section;

FIG. 17 is a block diagram showing a configuration example (a third embodiment) of the coil temperature estimating section;

FIG. 18 is a block diagram showing a configuration example (the third embodiment) of the coil temperature calculating section;

FIG. 19 is a block diagram showing a configuration example (a fourth embodiment) of the coil temperature calculating section;

FIG. 20 is a block diagram showing a configuration example (a fifth embodiment) of the present invention;

FIG. 21 is a block diagram showing a configuration example (the fifth embodiment) of the coil temperature estimating section;

FIG. 22 is a block diagram showing a configuration example (the fifth embodiment) of the coil temperature calculating section;

FIG. 23 is a flowchart showing an operating example (the fifth embodiment) of estimation of the coil temperature;

FIG. 24 is a block diagram showing a configuration example (a sixth embodiment) of the coil temperature calculating section;

FIG. 25 is a block diagram showing a configuration example (a seventh embodiment) of the present invention;

FIG. 26 is a block diagram showing a configuration example (the seventh embodiment) of the coil temperature calculating section;

FIG. 27 is a flowchart showing an operating example (the seventh embodiment) of estimation of the coil temperature; and

FIG. 28 is a block diagram showing a configuration example (an eighth embodiment) of the coil temperature calculating section.

Mode for Carrying Out the Invention

The present invention estimates temperatures of coils (coil temperatures) in respective phases (a U-phase, a V-phase and a W-phase) of a poly-phase motor based on a heat transfer phenomenon (a heat conduction, a heat radiation, a heat convection, and so on) between respective phases and a heat transfer phenomenon between each coil and a substrate (a control substrate) of a control unit (ECU). In the poly-phase motor, a difference in calorific values of respective coils occurs by such as dispersion of currents (motor currents) passing through the coils in respective phases, and that causes a difference in temperature between respective coils. This difference in temperature causes heat transfer phenomena between respective phases and between each coil and outside air environment, while a difference in temperature occurs also between the control substrate and each coil. Since the control substrate and the motor are generally close, heat transfer phenomena also occur between the control substrate and each coil and between the control substrate and the outside air environment. The present invention estimates the coil temperature using a motor current and a temperature of the control substrate (a substrate temperature) by expressing those heat transfer phenomena, for example, by a frequency characteristic, formulating a relationship between the calorific value and the coil temperature, and obtaining the calorific value from the motor current. Further, in the case that a poly-phase motor has multi-system motor windings, one of the present inventions estimates the coil temperature by considering a heat transfer phenomenon between a coil of one system and a coil of another system. Furthermore, the present invention estimates the coil temperature by setting a motor current of an abnormal system to zero when an abnormality (including a failure) occurs in one of the systems. When the abnormality occurs in one of the systems, another of the present inventions corrects the calorific value obtained from a motor current of a normal system, for example, by using gain-multiplication, and estimates the coil temperature based on the corrected calorific value. These processes enable simple and precise estimation of the temperature at both normal time and abnormal time.

Hereinafter, an embodiment of the present invention will be described with reference to the accompanying drawings.

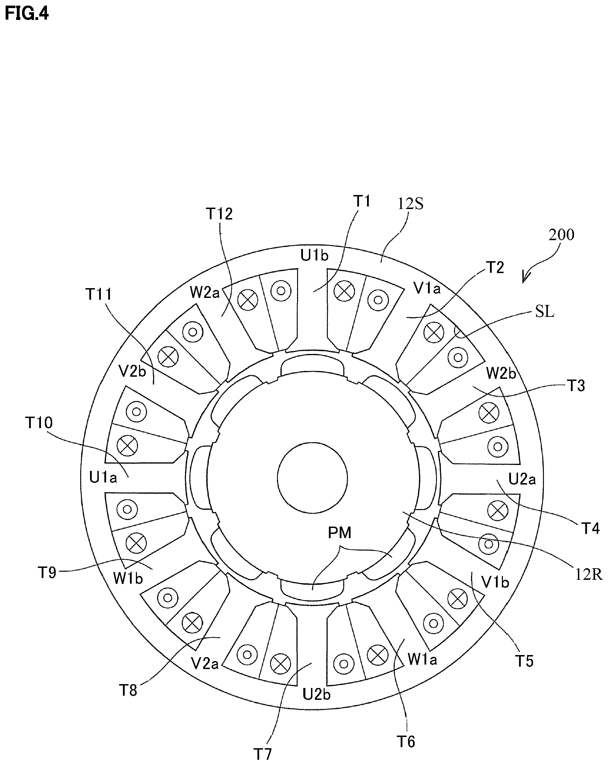

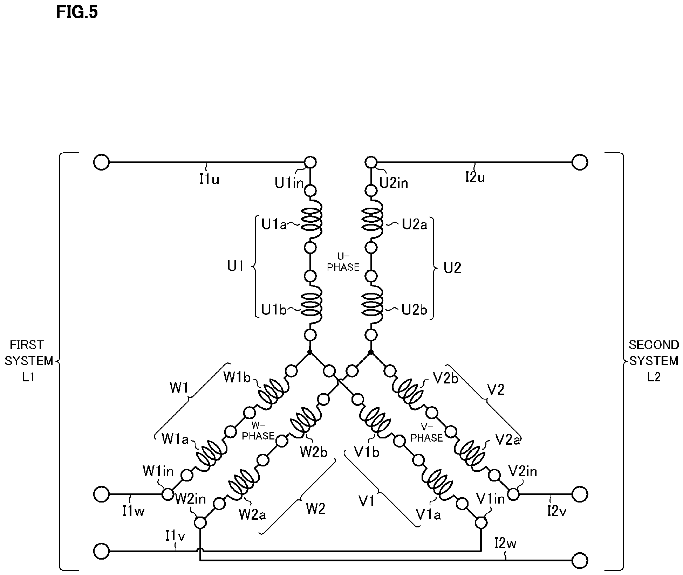

The present embodiment supposes a case where three-phase motor has two-system motor windings as a case where poly-phase motor has multi-system motor windings. First, an example of the motor will be described with reference to FIG. 4 and FIG. 5. Although the present motor is an electric motor, the following explanations merely describe it as a "motor".

As shown in FIG. 4, a three-phase motor 200 has a configuration of a surface permanent magnet (SPM) motor that includes a stator 12S having teeth T which are magnetic poles and form slots SL inwardly protruding at an inner periphery, and an eight-pole surface magnet-type rotor 12R which is rotatably disposed opposite to the teeth T at the inner periphery of the stator 12S and wherein permanent magnets PM are mounted on the surface. Here, the number of the teeth T of the stator 12S is set to "phase number × 2n" ("n" is an integer which is two or more) . For example, in the case of n = 2, the motor has a configuration of eight poles and twelve slots. Moreover, the number of the pole is not limited to 8, and the number of the slot is not limited to 12.

In the two systems as shown in FIG. 5, a first three-phase motor winding L1 and a second three-phase motor winding L2, which are poly-phase motor windings where each of the same phase magnetic poles is in phase with the rotor magnets, are wound on the slots SL of the stator 12S. In the first three-phase motor winding L1, respective one-ends of a U-phase coil U1, a V-phase coil V1 and a W-phase coil W1 are connected each other so as to form a star-connection. The other ends of the phase coils U1, V1 and W1 are connected to an ECU of an electric power steering apparatus, and motor driving currents I1u, I1v and I1w are individually supplied to the respective coils.

In the phase coils U1, V1 and W1, two coil sections U1a and U1b, V1a and V1b, and W1a and W1b are respectively formed. The coil sections U1a, V1a and W1a are wound on the teeth T10, T2 and T6 whose positions form an equilateral triangle by concentrated winding. Further, the coil sections U1b, V1b and W1b are wound on the teeth T1, T5 and T9 which are disposed at the positions where the teeth T10, T2 and T6 are respectively shifted by 90 degrees clockwise by concentrated winding.

Similarly, in the second three-phase motor winding L2, respective one-ends of a U-phase coil U2, a V-phase coil V2 and a W-phase coil W2 are connected each other so as to form the star-connection. The other ends of the phase coils U2, V2 and W2 are connected to the ECU of the electric power steering apparatus, and motor driving currents I2u, I2v and I2w are individually supplied to the respective coils.

In the phase coils U2, V2 and W2, two coil sections U2a and U2b, V2a and V2b, and W2a and W2b are respectively formed. The coil sections U2a, V2a and W2a are wound on the teeth T4, T8 and T12 whose positions form the equilateral triangle by concentrated winding. Further, the coil sections U2b, V2b and W2b are wound on the teeth T7, T11 and T3 which are disposed at the positions where the teeth T4, T8 and T12 are respectively shifted by 90 degrees clockwise by concentrated winding.

Then, the coil sections U1a and U1b, V1a and V1b, and W1a and W1b of the phase coils U1, V1 and W1, and the coil sections U2a and U2b, V2a and V2b, and W2a and W2b of the phase coils U2, V2 and W2 are wound on the slots SL which sandwich the respective teeth T so that the current directions are the same direction.

As stated above, the coil sections U1a and U1b, V1a and V1b, and W1a and W1b of the phase coils U1, V1 and W1 which form the first three-phase motor winding L1, and the coil sections U2a and U2b, V2a and V2b, and W2a and W2b of the phase coils U2, V2 and W2 which form the second three-phase motor winding L2 are wound on the twelve teeth T which are different each other.

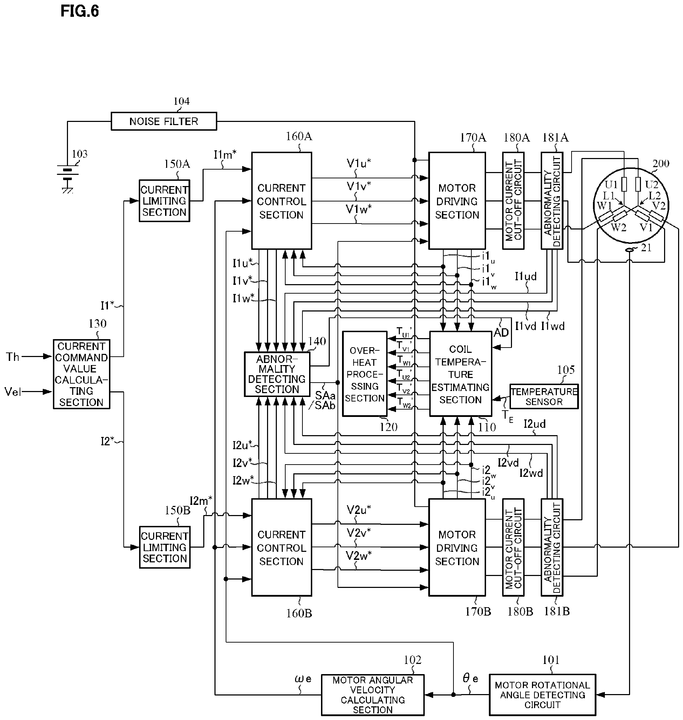

For such a three-phase motor having the two-system windings, a configuration example (a first embodiment) of an embodiment of the present invention that supplies a current from an individual inverter, and that decides a switching means where a failure occurs, controls a switching means except the faulty switching means, controls a normal inverter except the faulty inverter including the faulty switching means, and continues to the estimation of the coil temperature when an OFF-failure (an open failure) or an ON-failure (a short failure) where a switching means of one inverter becomes shut-down occurs, will be described with reference to FIG. 6. Hereinafter, a system of the three-phase motor winding L1 is referred to a "first system", and a system of the three-phase motor winding L2 is referred to a "second system".

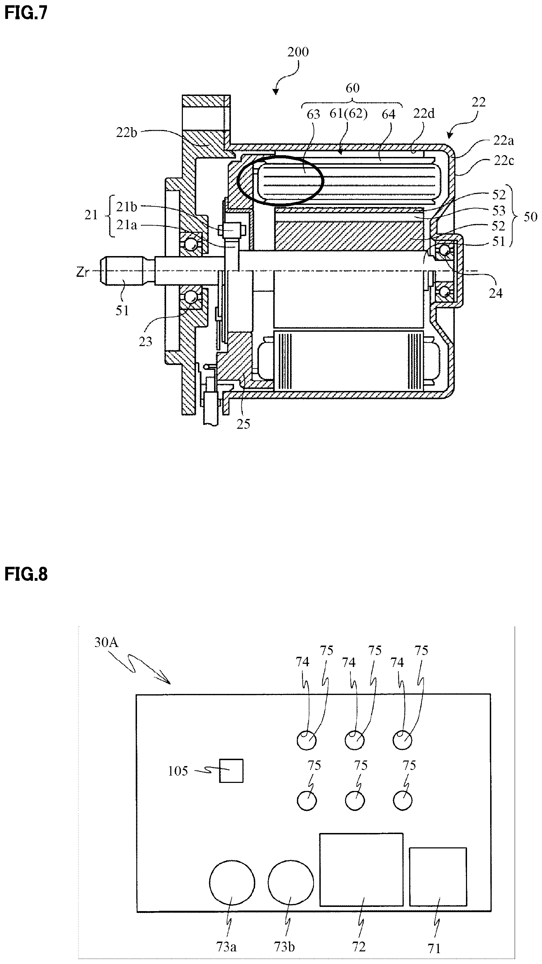

In the present embodiment, an object for estimation of the coil temperature is a coil shown by the circle in FIG. 7. FIG. 7 is a sectional view which schematically shows a side obtained by cutting a configuration of a three-phase motor 200 with a virtual plane including a central axis Zr. The three-phase motor 200 comprises a rotational angle sensor (a resolver) 21, a housing 22, bearings 23 and 24, a rotor 50, and a stator 60. The resolver 21 comprises a resolver rotor 21a and a resolver stator 21b, and is supported by a terminal block 25. The housing 22 includes a cylindrical housing 22a and a front bracket 22b, and a bottom part 22c is formed at an opposite end to the front bracket 22b in the cylindrical housing 22a so as to block the end. The bearing 23 rotatably supports one end of a shaft 51 which is a part of the rotor 50 located inside the cylindrical housing 22a, the bearing 24 rotatably supports the other end of the shaft 51, and thus the shaft 51 rotates around the central axis Zr. The rotor 50 includes the shaft 51, a rotor yoke 52 and a magnet 53. The stator 60 includes a cylindrical stator core 61 and a coil (an exciting coil) 63, and the exciting coil 63 is wound onto the stator core 61. The stator core 61 includes a plurality of split cores 62, and the exciting coil 63 is concentratedly wound outside teeth (not shown) of the split cores 62 through an insulator (a member to insulate the split cores 62 from the exciting coil 63) 64. As described above, a temperature of the coil shown by the circle in the exciting coil 63 is estimated.

In FIG. 6, a temperature sensor 105 detects a temperature of the control substrate, and outputs it as a substrate temperature $T_E$. What detects the substrate temperature $T_E$ and is mountable may be used as the temperature sensor 105, and, for example, a thermistor is used. An ECU 30 comprises a power circuit substrate and a control circuit substrate that are arranged at a predetermined interval in parallel each other as the control substrate. FIG. 8 shows a bottom side of a power circuit substrate 30A. The temperature sensor (the thermistor) 105 detects a temperature of three-phase bridges of FETs (FET1 to FET6) mounted of the upper surface of the power circuit substrate 30A as the substrate temperature $T_E$. On the bottom side of the power circuit substrate 30A, a relay circuit 71, a coil 72 for noise countermeasure, and electrolytic capacitors 73a and 73b for smoothing a power supply are arranged, through-holes 74 that pierce the power circuit substrate 30A are formed at the positions opposite to the undersides of the FET1 to FET6 respectively, and discoid copper coins 75 serving as heat conductive members are press-fitted into the through-holes 74 respectively. Since the thermistor 105 is connected to the undersides of the copper coins 75 touching the FET1 to FET6 through a heat conductive grease with insulation (not shown), it is possible to make heat resistances between the thermistor 105 and the FET1 to FET6 small, and conduct heating temperatures of the FET1 to FET6 to the thermistor 105 with the low heat resistances, dispersion of the heat resistances between a plurality of FET1 to FET6 and the thermistor 105 becomes small, and it is possible to accurately measure the temperatures of the FET1 to FET6. Moreover, a control circuit substrate, which is not shown in FIG. 8, that comprises a device using a signal whose level is 5 V, such as an MCU, an ASIC and so on, is arranged at a predetermined interval in parallel with the power circuit substrate 30A.

The first embodiment comprises a current command value calculating section 130 that calculates current command values I1* and I2* for the respective systems. In order to drive and control the three-phase motor 200 based on the current command values I1* and I2*, the first embodiment comprises current limiting sections 150A and 150B that respectively limit the maximum values of the current command values I1* and I2*, current control sections 160A and 160B that calculate voltage command values, motor driving sections 170A and 170B that input the voltage command values, and motor current cut-off circuits 180A and 180B that are interposed between output sides of the motor driving sections 170A and 170B and the first motor winding L1 and the second motor winding L2 of the three-phase motor 200, for the respective systems. Further, the first embodiment comprises abnormality detecting circuits 181A and 181B that are connected to the motor current cut-off circuits 180A and 180B, and an abnormality detecting section 140 that detects the abnormality based on outputs from the abnormality detecting circuits 181A and 181B and outputs from the current control sections 160A and 160B. The first embodiment comprises the temperature sensor 105 and a coil temperature estimating section 110 in order to estimate the coil temperature, and also comprises an overheat processing section 120 that detects overheating of the coil based on the estimated coil temperature.

The three-phase motor 200 comprises the rotational angle sensor 21 such as a Hall element or the like that detects a rotational angle of the rotor, a value detected by the rotational angle sensor 21 is inputted into a motor rotational angle detecting circuit 101, a motor rotational angle (that is an electric angle) $\theta e$ is detected in the motor rotational angle detecting circuit 101, the motor rotational angle $\theta e$ is inputted into a motor angular velocity calculating section 102, and a motor angular velocity $\omega e$ is calculated in the motor angular velocity calculating section 102. Further, a direct current is supplied to the motor driving sections 170A and 170B through a noise filter 104 from a battery 103 serving as a direct-current power source.

The current command value calculating section 130 calculates the current command value based on a steering torque Th and a vehicle speed Vel by using an assist map or the like as with a current command value calculating section 31 shown in FIG. 2. Suppose that the first system and the second system equally drive the three-phase motor 200 in the present embodiment, the current command value calculating section 130 halves the current command value necessary to drive the three-phase motor 200, and outputs the current command values I1* and I2* for the respective systems. Moreover, as with a configuration example shown in FIG. 2, it is possible to add a compensation signal generating section 34, and to add a compensation signal CM from the compensation signal generating section 34 to the current command value.

As with a current limiting section 33 shown in FIG. 2, the current limiting sections 150A and 150B limit maximum currents of the current command values I1* and I2* respectively, and output current command values I1m* and I2m*.

The current control section 160A calculates a three-phase voltage command value (consisting of a U-phase voltage command value V1u*, a V-phase voltage command value V1v*, and a W-phase voltage command value V1w*) for the motor driving section 170A based on the current command value I1m*, a three-phase motor current (consisting of a U-phase motor current $i1_u$, a V-phase motor current $i1_v$, and a W-phase motor current $i1_w$) fed back from the motor driving section 170A, the motor rotational angle $\theta e$, and the motor angular velocity $\omega e$.

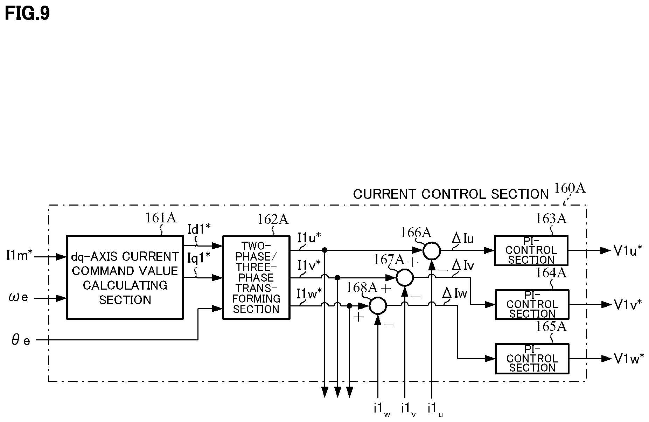

A configuration example of the current control section 160A is shown in FIG. 9. The current control section 160A comprises a dq-axis current command value calculating section 161A, a two-phase/three-phase transforming section 162A, PI-control sections 163A, 164A and 165A, and subtracting sections 166A, 167A and 168A. The dq-axis current command value calculating section 161A calculates a d-axis current command value Id1* and a q-axis current command value Iq1* that are current command values in a dq-rotary coordinate system based on the current command value I1m* and the motor angular velocity $\omega$e. For example, the dq-axis current command value calculating section 161A calculates the d-axis current command value Id1* and the q-axis current command value Iq1* by a method performed in a d-q axis current command value calculating section described in the publication of Japanese Patent No. 5282376 B. In the calculation, when a motor angular velocity corresponding to a mechanical angle of the motor is needed, it is calculated based on the motor angular velocity $\omega$e corresponding to an electric angle. The two-phase/three-phase transforming section 162A transforms a two-phase current command value consisting of the d-axis current command value Id1* and the q-axis current command value Iq1* into a three-phase current command value (consisting of a U-phase current command value I1u*, a V-phase current command value I1v*, and a W-phase current command value I1w*) in a UVW-fixed coordinate system by using the motor rotational angle $\theta$e based on a spatial vector modulation (a spatial vector transformation). The three-phase current command value is inputted into the abnormality detecting section 140, and at the same time, the respective values of the three-phase current command value are addition-inputted into the subtracting sections 166A, 167A and 168A respectively. The three-phase motor current (consisting of the U-phase motor current $i1_u$, the V-phase motor current $i1_v$, and the W-phase motor current $i1_w$) fed back from the motor driving section 170A are subtraction-inputted into the subtracting sections 166A, 167A and 168A, deviations $\Delta$Iu, $\Delta$Iv and $\Delta$Iw between the three-phase current command value and the three-phase motor current are obtained at the subtracting section 166A, 167A and 168A respectively, and the respective deviations are inputted into the PI-control sections 163A, 164A and 165A respectively. As with a PI-control section 35 shown in FIG. 2, the PI-control sections 163A, 164A and 165A obtain the three-phase voltage command value (consisting of the U-phase voltage command value V1u*, the V-phase voltage command value V1v*, and the W-phase voltage command value V1w*) based on the deviations $\Delta$Iu, $\Delta$Iv and $\Delta$Iw respectively.

The current control section 160B calculates a three-phase voltage command value (consisting of a U-phase voltage command value V2u*, a V-phase voltage command value V2v*, and a W-phase voltage command value V2w*) for the motor driving section 170B based on the current command value I2m*, a three-phase motor current (consisting of a U-phase motor current $i2_u$, a V-phase motor current $i2_v$, and a W-phase motor current $i2_w$) fed back from the motor driving section 170B, the motor rotational angle $\theta$e, and the motor angular velocity $\omega$e, by the same configuration and operations as those of the current control section 160A. A three-phase current command value (consisting of a U-phase current command value I2u*, a V-phase current command value I2v*, and a W-phase current command value I2w*) calculated in the current control section 160B is also inputted into the abnormality detecting section 140.

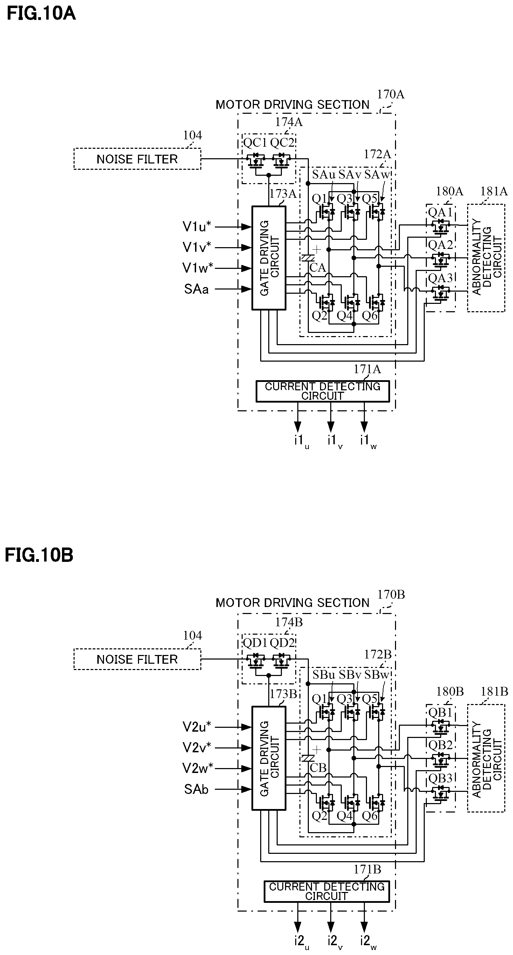

In addition to the U-phase current command value I1u*, the V-phase current command value I1v*, the W-phase current command value I1w*, the U-phase current command value I2u*, the V-phase current command value I2v* and the W-phase current command value I2w*, detected motor current values I1ud, I1vd, I1wd, I2ud, I2vd, and I2wd that are detected by the abnormality detecting circuits 181A and 181B provided between the motor current cut-off circuits 180A and 180B and the first motor winding L1 and the second motor winding L2 of the three-phase motor 200, are inputted into the abnormality detecting section 140. Here, a configuration example of the motor driving section 170A and the motor current cut-off circuit 180A is shown in FIG. 10A, and a configuration example of the motor driving section 170B and the motor current cut-off circuit 180B is shown in FIG. 10B. The motor driving circuits 170A and 170B respectively comprise gate driving circuits 173A and 173B that generate gate signals by inputting the three-phase voltage command value (V1u*, V1v* and V1w*) outputted from the current control section 160A and the three-phase voltage command value (V2u*, V2v* and V2w*) outputted from the current control section 160B and that serve as the current control sections at abnormal time, inverters 172A and 172B that input the gate signals outputted from the gate driving circuits 173A and 173B, and current detecting circuits 171A and 171B. The abnormality detecting section 140 detects an open failure (an OFF-failure) and a short failure (an ON-failure) of field effect transistors (FETs) Q1 to Q6 serving as switching elements that constitute the inverters 172A and 172B by comparing the inputted detected motor current values I1ud to I1wd and I2ud to I2wd with the three-phase current command values (I1u* to I1w*, and I2u* to I2w*) respectively. When detecting the abnormality caused by the open failure or the short failure of the FETs constituting the inverters 172A and 172B, the abnormality detecting section 140 outputs an abnormal system cut-off command SAa or SAb to the gate driving circuit 173A or 173B of the motor driving section 170A or 170B where the abnormality is detected, and outputs an abnormal detection signal AD to the coil temperature estimating section 110. In order that the system where the abnormality is detected is identified by the abnormal detection signal AD, for example, the abnormality detecting section 140 sets "1" on the abnormal detection signal AD when the first system is abnormal, sets "2" on the abnormal detection signal AD when the second system is abnormal, and sets "3" on the abnormal detection signal AD when the both systems are abnormal.

When the three-phase voltage command values are inputted from the current control sections 160A and 160B, each of the gate driving circuits 173A and 173B in the motor driving section 170A and 170B generates six PWM-signals (gate signals) based on these voltage command values and a carrier signal of a triangular wave, and outputs these PWM-signals to each of the inverters 172A and 172B.

Further, at the normal time when the abnormal system cut-off command SAa is not inputted into the gate driving circuit 173A from the abnormality detecting section 140, the gate driving circuit 173A outputs three gate signals of high level to the motor current cut-off circuit 180A, and outputs two gate signals of high level to a power source cut-off circuit 174A. At the abnormal time when the abnormal system cut-off command SAa has been inputted into the gate driving circuit 173A from the abnormality detecting section 140, the gate driving circuit 173A simultaneously outputs three gate signals of low level to the motor current cut-off circuit 180A, cuts off the motor currents, simultaneously outputs two gate signals of low level to the power source cut-off circuit 174A, and cuts off a battery power.

Similarly, at the normal time when the abnormal system cut-off command SAb is not inputted into the gate driving circuit 173B from the abnormality detecting section 140, the gate driving circuit 173B outputs three gate signals of high level to the motor current cut-off circuit 180B, and outputs two gate signals of high level to a power source cut-off circuit 174B. At the abnormal time when the abnormal system cut-off command SAb has been inputted into the gate driving circuit 173B from the abnormality detecting section 140, the gate driving circuit 173B simultaneously outputs three gate signals of low level to the motor current cut-off circuit 180B, cuts off the motor currents, simultaneously outputs two gate signals of low level to the power source cut-off circuit 174B, and cuts off the battery power.

A battery current of the battery 103 is inputted into the inverters 172A and 172B respectively through the noise filter 104 and the power source cut-off circuits 174A and 174B, and electrolytic capacitors CA and CB for smoothing are respectively connected to input sides of the inverters 172A and 172B.

The inverters 172A and 172B respectively have six FETs Q1 to Q6 (which correspond to FET1 to FET6 in FIG. 3) serving as switching elements, and have a configuration created by connecting in parallel three switching-arms (SAu, SAv and SAw in the inverter 172A; SBu, SBv and SBw in the inverter 172B) that are configured by connecting in series two FETs. U-phase currents I1u and I2u, V-phase currents I1v and I2v, and W-phase currents I1w and I2w, which are the motor driving currents, are inputted from a connection between the FETs of each switching-arm into the first motor winding L1 and the second motor winding L2 of the three-phase motor 200 through the motor current cut-off circuits 180A and 180B by inputting the PWM-signals outputted from the gate driving circuits 173A and 173B into the gates of the FETs Q1 to Q6.

A both-end voltage of a shunt resistor, which is not shown in FIG. 10, interposed between each switching-arm of the inverters 172A and 172B and the ground is inputted into the current detecting circuits 171A and 171B in the motor driving sections 170A and 170B, and the three-phase motor currents ($i1_u$, $i1_v$ and $i1_w$, and $i2_u$, $i2_v$ and $i2_w$) are detected.

The motor current cut-off circuit 180A has three FETs QA1, QA2 and QA3 for current cut-off, and the motor current cut-off circuit 180B has three FETs QB1, QB2 and QB3 for current cut-off. The FETs QA1 to QA3 and the FETs QB1 to QB3 of the motor current cut-off circuits 180A and 180B are connected to respective parasitic diodes whose cathodes are disposed at the inverters 172A and 172B sides in the same direction.

The power source cut-off circuits 174A and 174B respectively have a series circuit configuration where two FETs QC1 and QC2 and two FETs QD1 and QD2 are disposed so that drains are connected each other and parasitic diodes are provided in an opposite direction. Sources of the FETs QC1 and QD1 are connected each other, and are connected to an output side of the noise filter 104. Sources of the FETs QC2 and QD2 are respectively connected to sources of the FETs Q1, Q2 and Q3 of the inverters 172A and 172B.

The coil temperature estimating section 110 estimates coil temperatures $T_{U1}'$, $T_{V1}'$ and $T_{W1}'$ of respective phases in the first system and coil temperatures $T_{U2}'$, $T_{V2}'$ and $T_{W2}'$ of respective phases in the second system based on the three-phase motor currents from the motor driving section 170A and the motor driving section 170B in addition to the substrate temperature $T_E$ from the temperature sensor 105.

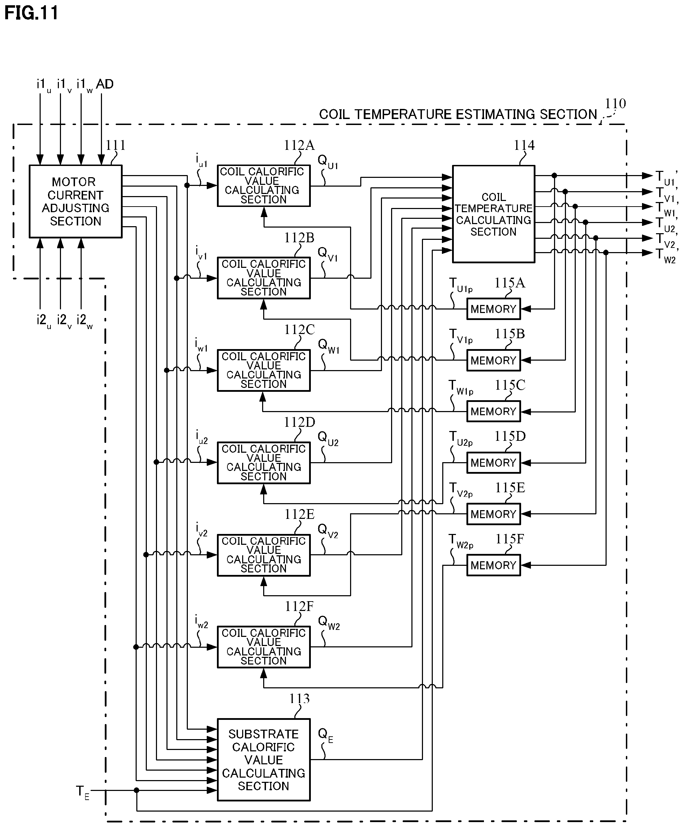

A configuration example of the coil temperature estimating section 110 is shown in FIG. 11. The coil temperature estimating section 110 comprises a motor current adjusting section 111, coil calorific value calculating sections 112A, 112B, 112C, 112D, 112E and 112F, a substrate calorific value calculating section 113, a coil temperature calculating section 114, and memories 115A, 115B, 115C, 115D, 115E and 115F.

Here, an estimation method of the coil temperature at the coil temperature estimating section 110 will be described.

Calorific values (coil calorific values) $Q_{U1}$, $Q_{V1}$ and $Q_{W1}$ of respective phase coils in the first system and calorific values (coil calorific values) $Q_{U2}$, $Q_{V2}$ and $Q_{W2}$ of respective phase coils in the second system can be obtained from an expression of electric power occurring in a resistance, and a resistance of a coil (a coil resistance) is changed depending on a coil temperature of the coil. Therefore, the coil calorific values $Q_{U1}$, $Q_{V1}$, $Q_{W1}$, $Q_{U2}$, $Q_{V2}$ and $Q_{W2}$ are calculated in accordance with the following expressions 1 to 6 by dealing with the coil resistance as a function of the coil temperature.

[Expression 1]

$$Q_{U1} = R_{U1}(T_{U1}) \times i_{u1}(t)^2$$

[Expression 2]

$$Q_{V1} = R_{V1}(T_{V1}) \times i_{v1}(t)^2$$

[Expression 3]

$$Q_{W1} = R_{W1}(T_{W1}) \times i_{w1}(t)^2$$

[Expression 4]

$$Q_{U2} = R_{U2}(T_{U2}) \times i_{u2}(t)^2$$

[Expression 5]

$$Q_{V2} = R_{V2}(T_{V2}) \times i_{v2}(t)^2$$

[Expression 6]

$$Q_{W2} = R_{W2}(T_{W2}) \times i_{w2}(t)^2$$

Here, $R_{U1}(T_{U1})$, $R_{V1}(T_{V1})$ and $R_{W1}(T_{W1})$ are respectively the coil resistances of the U-phase, the V-phase and the W-phase in the first system, and $R_{U2}(T_{U2})$, $R_{V2}(T_{V2})$ and $R_{W2}(T_{W2})$ are respectively the coil resistances of the U-phase, the V-phase and the W-phase in the second system. $T_{U1}$, $T_{V1}$ and $T_{W1}$ are respectively the coil temperatures of the U-phase, the V-phase and the W-phase in the first system, and $T_{U2}$, $T_{V2}$ and $T_{W2}$ are respectively the coil temperatures of the U-phase, the V-phase and the W-phase in the second system. The motor currents $i_{u1}$, $i_{v1}$, $i_{w1}$, $i_{u2}$, $i_{v2}$ and $i_{w2}$ are expressed as functions of time t.

Moreover, the coil resistances $R_{U1}(T)$, $R_{V1}(T)$, $R_{W1}(T)$, $R_{U2}(T)$, $R_{V2}(T)$ and $R_{W2}(T)$ in the case that the coil temperature is T, can be calculated in accordance with the following expressions 7 to 12 when the coil resistances at a reference temperature $T_b$ are $R_{U10}$, $R_{V10}$, $R_{W10}$, $R_{U20}$, $R_{V20}$ and $R_{W20}$ respectively.

[Expression 7]

$$R_{U1}(T) = R_{U10} \times \left\{ 1 + \alpha_{U1} \times (T - T_b) \right\}$$

[Expression 8]

$$R_{V1}(T) = R_{V10} \times \left\{ 1 + \alpha_{V1} \times (T - T_b) \right\}$$

[Expression 9]

$$R_{W1}(T) = R_{W10} \times \left\{ 1 + \alpha_{W1} \times (T - T_b) \right\}$$

[Expression 10]

$$R_{U2}(T) = R_{U20} \times \left\{ 1 + \alpha_{U2} \times (T - T_b) \right\}$$

[Expression 11]

$$R_{V2}(T) = R_{V20} \times \left\{ 1 + \alpha_{V2} \times \left( T - T_b \right) \right\}$$

[Expression 12]

$$R_{W2}(T) = R_{W20} \times \left\{ 1 + \alpha_{W2} \times \left( T - T_b \right) \right\}$$

Here, $\alpha_{U1}$, $\alpha_{V1}$ and $\alpha_{W1}$ are respectively temperature coefficients of the U-phase, the V-phase and the W-phase in the first system, $\alpha_{U2}$, $\alpha_{V2}$ and $\alpha_{W2}$ are respectively temperature coefficients of the U-phase, the V-phase and the W-phase in the second system. They become, for example, $4.4 \times 10^{-3}$ [1/°C] when the coil is a copper, and may be finely adjusted by an experiment or the like.

The coil calorific values $Q_{U1}$ to $Q_{W1}$ and $Q_{U2}$ to $Q_{W2}$ can be calculated in accordance with the following expressions 13 to 18 by substituting the expressions 7 to 12 for the expressions 1 to 6 respectively.

[Expression 13]

$$Q_{U1} = R_{U10} \times \left\{ 1 + \alpha_{U1} \times \left( T_{U1} - T_b \right) \right\} \times i_{u1}(t)^2$$

[Expression 14]

$$Q_{V1} = R_{V10} \times \left\{ 1 + \alpha_{V1} \times \left( T_{V1} - T_b \right) \right\} \times i_{v1}(t)^2$$

[Expression 15]

$$Q_{W1} = R_{W10} \times \left\{ 1 + \alpha_{W1} \times \left( T_{W1} - T_b \right) \right\} \times i_{w1}(t)^2$$

[Expression 16]

$$Q_{U2} = R_{U20} \times \left\{ 1 + \alpha_{U2} \times \left( T_{U2} - T_b \right) \right\} \times i_{u2}(t)^2$$

[Expression 17]

$$Q_{V2} = R_{V20} \times \left\{ 1 + \alpha_{V2} \times \left( T_{V2} - T_b \right) \right\} \times i_{v2}(t)^2$$

[Expression 18]

$$Q_{W2} = R_{W20} \times \left\{ 1 + \alpha_{W2} \times \left( T_{W2} - T_b \right) \right\} \times i_{w2}(t)^2$$

The coil calorific value calculating sections 112A, 112B, 112C, 112D, 112E and 112F in the coil temperature estimating section 110 calculate the coil calorific values by using the above expressions 13 to 18 respectively.

A calorific value of the control substrate (a substrate calorific value) $Q_E$ is also calculated from an expression of electric power occurring in a resistance, and a magnitude of a current needed for the calculation is obtained by the motor currents $i_{u1}$ to $i_{w1}$ and $i_{u2}$ to $i_{w2}$. A calorific equivalent resistance of the control substrate (a substrate resistance) is changed depending on a temperature (the substrate temperature $T_E$ in the case of the control substrate) as with the coil resistance, so that the substrate calorific value $Q_E$ is calculated in accordance with the following expression 19.

[Expression 19]

$$Q_E = R_E(T_E) \times \left( i_{u1}(t)^2 + i_{v1}(t)^2 + i_{w1}(t)^2 + i_{u2}(t)^2 + i_{v2}(t)^2 + i_{w2}(t)^2 \right)$$

Here, $R_E(T_E)$ is the substrate resistance.

The substrate resistance $R_E(T)$ in the case that the substrate temperature is T is calculated in accordance with the following expression 20 when the substrate resistance at the reference temperature $T_b$ is $R_{E0}$ and a temperature coefficient of the control substrate is $\alpha_E$, and the substrate calorific value $Q_E$ can be calculated in accordance with the following expression 21 by substituting the expression 20 for the expression 19.

[Expression 20]

$$R_E(T) = R_{E0} \times \left\{ 1 + \alpha_E \times \left( T - T_b \right) \right\}$$

[Expression 21]

$$Q_E = R_{E0} \times \left\{ 1 + \alpha_E \times \left( T_E - T_b \right) \right\} \times \left( i_{u1}(t)^2 + i_{v1}(t)^2 + i_{w1}(t)^2 + i_{u2}(t)^2 + i_{v2}(t)^2 + i_{w2}(t)^2 \right)$$

The substrate calorific value calculating section 113 calculates the substrate calorific value $Q_E$ by using the above expression 21.

Transfer functions from the calorific values calculated in accordance with the above expressions 13 to 18 and 21 and an outside air temperature $T_0$ to the coil temperatures $T_{U1}$, $T_{V1}$ and $T_{W1}$ of respective phases in the first system, the coil temperatures $T_{U2}$, $T_{V2}$ and $T_{W2}$ of respective phases in the second system and the substrate temperature $T_E$, can be expressed by the following expressions 22 to 28.

[Expression 22]

$$T_{U1} = G_{U1U1}(s)Q_{U1} + G_{V1U1}(s)Q_{V1} + G_{W1U1}(s)Q_{W1} + $$
$$G_{U2U1}(s)Q_{U2} + G_{V2U1}(s)Q_{V2} + G_{W2U1}(s)Q_{W2} + G_{EU1}(s)Q_E + G_{0U1}(s)T_0$$

[Expression 23]

$$T_{V1} = G_{U1V1}(s)Q_{U1} + G_{V1V1}(s)Q_{V1} + G_{W1V1}(s)Q_{W1} + $$
$$G_{U2V1}(s)Q_{U2} + G_{V2V1}(s)Q_{V2} + G_{W2V1}(s)Q_{W2} + G_{EV1}(s)Q_E + G_{0V1}(s)T_0$$

[Expression 24]

$$T_{W1} = G_{U1W1}(s)Q_{U1} + G_{V1W1}(s)Q_{V1} + G_{W1W1}(s)Q_{W1} + $$
$$G_{U2W1}(s)Q_{U2} + G_{V2W1}(s)Q_{V2} + G_{W2W1}(s)Q_{W2} + G_{EW1}(s)Q_E + G_{0W1}(s)T_0$$

[Expression 25]

$$T_{U2} = G_{U1U2}(s)Q_{U1} + G_{V1U2}(s)Q_{V1} + G_{W1U2}(s)Q_{W1} + $$
$$G_{U2U2}(s)Q_{U2} + G_{V2U2}(s)Q_{V2} + G_{W2U2}(s)Q_{W2} + G_{EU2}(s)Q_E + G_{0U2}(s)T_0$$

[Expression 26]

$$T_{V2} = G_{U1V2}(s)Q_{U1} + G_{V1V2}(s)Q_{V1} + G_{W1V2}(s)Q_{W1} +$$
$$G_{U2V2}(s)Q_{U2} + G_{V2V2}(s)Q_{V2} + G_{W2V2}(s)Q_{W2} + G_{EV2}(s)Q_E + G_{0V2}(s)T_0$$

[Expression 27]

$$T_{W2} = G_{U1W2}(s)Q_{U1} + G_{V1W2}(s)Q_{V1} + G_{W1W2}(s)Q_{W1} +$$
$$G_{U2W2}(s)Q_{U2} + G_{V2W2}(s)Q_{V2} + G_{W2W2}(s)Q_{W2} + G_{EW2}(s)Q_E + G_{0W2}(s)T_0$$

[Expression 28]

$$T_E = G_{U1E}(s)Q_{U1} + G_{V1E}(s)Q_{V1} + G_{W1E}(s)Q_{W1} +$$
$$G_{U2E}(s)Q_{U2} + G_{V2E}(s)Q_{V2} + G_{W2E}(s)Q_{W2} + G_{EE}(s)Q_E + G_{0E}(s)T_0$$

Here, $G_{XY}(s)$ is a frequency characteristic (a calorific value frequency characteristic) from a calorific value $Q_X$ to a coil temperature $T_Y$ of a Y-phase (X and Y are one of U1, V1, W1, U2, V2, W2 and E), $G_{0x}$ is a frequency characteristic (an outside air temperature frequency characteristic) from the outside air temperature $T_0$ to a coil temperature $T_X$ of a X-phase (X is one of U1, V1, W1, U2, V2, W2 and E). In order to simplify the explanation, the control substrate is regarded as an E-phase, the U-phase, the V-phase and the W-phase in the first system are a U1-phase, a V1-phase and a W1-phase respectively, and the U-phase, the V-phase and the W-phase in the second system are a U2-phase, a V2-phase and a W2-phase respectively. "s" is a Laplace operator. In the case that a relationship between a group of the calorific values and the outside air temperature and the temperature (the coil temperature or the substrate temperature) of each phase is approximately a linear combination, the above frequency characteristic is defined as a transfer function having a predetermined value.

The following expression 29 are obtained by solving the above expression 28 for $T_0$ (hereinafter, "(s)" is omitted to make the expression easy to see by simplification).

[Expression 29]

$$T_0 = \frac{1}{G_{0E}}\left(T_E - G_{U1E}Q_{U1} - G_{V1E}Q_{V1} - G_{W1E}Q_{W1} - G_{U2E}Q_{U2} - G_{V2E}Q_{V2} - G_{W2E}Q_{W2} - G_{EE}Q_E\right)$$

The coil temperature calculating section 114 calculates the coil temperatures by using the above expressions 22 to 27 and 29. Since the control substrate has heating corresponding to standby power such as feeble heating of a semiconductor switching element and heating caused by operations of a microcomputer or other semiconductors without a current passing through the coil in a state where an ignition is turned on, increases (hereinafter referred to "additional coil temperatures") of respective coil temperatures caused by the influence of the heating have been obtained in advance as $T_{U10}$, $T_{V10}$, $T_{W10}$, $T_{U20}$, $T_{V20}$ and $T_{W20}$, and the coil temperature calculating section 114 adds the additional coil temperatures to the coil temperatures estimated in accordance with the above expressions 22 to 27 respectively, and calculates the coil temperature $T_{U1}'$, $T_{V1}'$, $T_{W1}'$ $T_{U2}'$, $T_{V2}'$ and $T_{W2}'$.

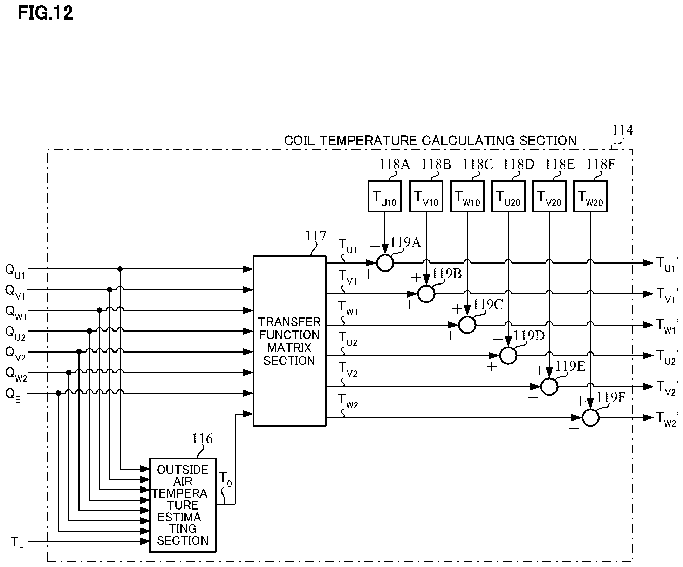

A configuration example of the coil temperature calculating section 114 is shown in FIG. 12. The coil temperature calculating section 114 comprises an outside air temperature estimating section 116 and a transfer function matrix section 117. The outside air temperature estimating section 116 has an outside air temperature frequency characteristic (transfer function) $G_{0E}$ and calorific value frequency characteristics (transfer functions) $G_{U1E}$ to $G_{W1E}$, $G_{U2E}$ to $G_{W2E}$ and $G_{EE}$, inputs the calorific values $Q_{U1}$ to $Q_{W1}$, $Q_{U2}$ to $Q_{W2}$ and $Q_E$ and the substrate temperature $T_E$, and estimates the outside air temperature $T_0$ by using the expression 29. The transfer function matrix section 117 has a transfer function matrix $G_1$ which performs the calculations of the expressions 22 to 27 and is expressed by the following expression 30, inputs the calorific values $Q_{U1}$ to $Q_{W1}$, $Q_{U2}$ to $Q_{W2}$ and $Q_E$ and the outside air temperature $T_0$ estimated by the outside air temperature estimating section 116, and calculates the coil temperatures $T_{U1}$ to $T_{W1}$ and $T_{U2}$ to $T_{W2}$ by using the transfer function matrix $G_1$.

[Expression 30]

$$G_1 = \begin{pmatrix} G_{U1U1} & G_{V1U1} & G_{W1U1} & G_{U2U1} & G_{V2U1} & G_{W2U1} & G_{EU1} & G_{0U1} \\ G_{U1V1} & G_{V1V1} & G_{W1V1} & G_{U2V1} & G_{V2V1} & G_{W2V1} & G_{EV1} & G_{0V1} \\ G_{U1W1} & G_{V1W1} & G_{W1W1} & G_{U2W1} & G_{V2W1} & G_{W2W1} & G_{EW1} & G_{0W1} \\ G_{U1U2} & G_{V1U2} & G_{W1U2} & G_{U2U2} & G_{V2U2} & G_{W2U2} & G_{EU2} & G_{0U2} \\ G_{U1V2} & G_{V1V2} & G_{W1V2} & G_{U2V2} & G_{V2V2} & G_{W2V2} & G_{EV2} & G_{0V2} \\ G_{U1W2} & G_{V1W2} & G_{W1W2} & G_{U2W2} & G_{V2W2} & G_{W2W2} & G_{EW2} & G_{0W2} \end{pmatrix}$$

The additional coil temperature $T_{U10}$, $T_{V10}$, $T_{W10}$, $T_{U20}$, $T_{V20}$ and $T_{W20}$ are added to the coil temperature $T_{U1}$, $T_{V1}$, $T_{W1}$, $T_{U2}$, $T_{V2}$ and $T_{W2}$ at adding section 119A, 119B, 119C, 119D, 119E and 119F respectively, and the added results are outputted as the coil temperature $T_{U1}'$, $T_{V1}'$, $T_{W1}'$ $T_{U2}'$, $T_{V2}'$ and $T_{W2}'$.

The coil temperature $T_{U1}'$ to $T_{W1}'$ and $T_{U2}'$, to $T_{W2}'$ are inputted into the overheat processing section 120, and are retained in the memories 115A to 115F respectively in order to be used in the next calculations of the calorific values at the coil calorific value calculating sections 112A to 112F.

When an abnormality occurs in one of the systems, the coil temperature estimating section 110 can continue the estimation of the coil temperature by setting a motor current of the system where the abnormality occurs to zero. For example, when the abnormality occurs in the second system, the coil temperature estimating section 110 sets all of the motor currents $i_{u2}$, $i_{v2}$ and $i_{w2}$ to zero. As a result, the calorific values $Q_{U2}$, $Q_{V2}$ and $Q_{W2}$ calculated at the coil calorific value calculating sections 112D, 112E and 112F become zero, and the calorific values $Q_{U2}$ to $Q_{W2}$ equal to zero are used for calculating the coil temperature at the coil temperature calculating section 114.

The system where the abnormality occurs is judged by using the abnormal detection signal AD outputted from the abnormality detecting section 140, and the judgment and the process of setting the motor current to zero are performed at the motor current adjusting section 111. That is, the motor current adjusting section 111 inputs the motor currents $i1_u$, $i1_v$ and $i1_w$ outputted from the motor driving section 170A and the motor currents $i2_u$, $i2_v$ and $i2_w$ outputted from the motor driving section 170B. The motor current adjusting section 111 outputs these motor currents as the motor currents $i_{u1}$, $i_{v1}$, $i_{w1}$, $i_{u2}$, $i_{v2}$ and $i_{w2}$ at the normal time. In the case of inputting the abnormal detection signal AD, the motor current adjusting section 111 judges the system where the abnormality occurs based on a value of the abnormal detection signal AD, outputs the motor current of the normal system as it is, and outputs the motor current of the abnormal system, setting it to zero.

The overheat processing section 120 performs, for example, processing at an abnormality judging section 25 and a motor current limiting section 23 described in the publication of Japanese Patent No.4356295 B2. That is, as with the processing at the abnormality judging section 25, the abnormality processing section 210 judges whether the coil temperatures $T_{U1}'$ to $T_{W1}'$ and $T_{U2}'$ to $T_{W2}'$ exceed a preset tolerance limit temperature of the three-phase motor 200 or not, and judges that the three-phase motor 200 is overheated when they exceed it. When judging the overheating state, the overheat processing section 120 gradually decreases the current command value with the elapse of time and gradually decreases the motor current with the elapse of time as with the processing at the motor current limiting section 23, or sets the current command value to zero and cuts off the motor current. It is possible to mount a temperature detecting circuit 31 and a temperature detecting section 26 described in the same publication and judge an abnormality of the temperature detecting circuit 31.

In such a configuration, an operating example will be described.

As the operation starts, the motor rotational angle detecting circuit 101 detects the motor rotational angle $\theta e$ of the three-phase motor 200, and outputs it to the motor angular velocity calculating section 102 and the current control sections 160A and 160B.

The motor angular velocity calculating section 102 calculates the motor angular velocity $\omega e$ by means of the motor rotational angle $\theta e$, and outputs it to the current control sections 160A and 160B.

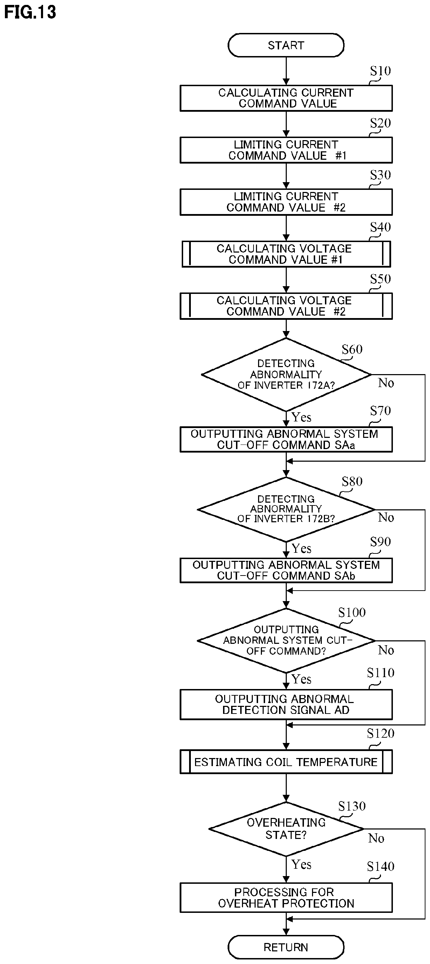

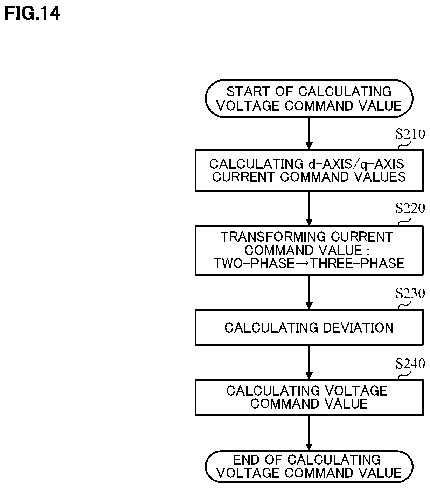

An operating example from the current command value calculating section 130 to the overheat processing section 120 will be described with reference to flowcharts in FIGs. 13 to 15.

The current command value calculating section 130 inputs the steering torque Th detected by the torque sensor 10 and the vehicle speed Vel detected by the vehicle speed sensor 12, calculates the current command value by using the assist map, halves it, and outputs the halved current command value to the current limiting sections 150A and 150B as the current command values I1* and I2* respectively (Step S10).

The current limiting sections 150A inputs the current command value I1*, outputs a predetermined value as the current command value I1m* when the current command value I1* exceeds the predetermined value, and outputs the current command value I1* as the current command value I1m* when the current command value I1* does not exceed the predetermined value (Step S20). Similarly, the current limiting section 150B inputs the current command value I2*, and obtains and outputs the current command value I2m* (Step S30).

The current control section 160A calculates the three-phase voltage command value based on the current command value I1m*, the three-phase motor current, the motor rotational angle $\theta e$ and the motor angular velocity $\omega e$ (Step S40).

The current command value I1m* and the motor angular velocity $\omega e$ are inputted into the dq-axis current command value calculating section 161A, the motor rotational angle $\theta e$ is inputted into the two-phase/three-phase transforming section 162A, and the three-phase motor current ($i1_u$, $i1_v$ and $i1_w$) is subtraction-inputted into the subtracting sections 166A, 167A and 168A respectively. The dq-axis current command value calculating section 161A calculates the d-axis current command value Id1* and the q-axis current command value Iq1* based on the current command value I1m* and the motor angular velocity $\omega e$ (Step S210), and outputs them to the two-phase/three-phase transforming section 162A. The two-phase/three-phase transforming section 162A transforms the d-axis current command value Id1* and the q-axis current command value Iq1* into the U-phase current command value I1u*, the V-phase current command value I1v* and the W-phase current command value I1w* by using the motor rotational angle $\theta e$ (Step S220). The U-phase current command value I1u*, the V-phase current command value I1v* and the W-phase current command value I1w* are outputted to the abnormality detecting section 140, and at the same time, are addition-inputted into the subtracting sections 166A, 167A and 168A respectively. The deviation $\Delta$Iu between the U-phase current command value I1u* and the motor current $i1_u$ is calculated at the subtracting section 166A, the deviation $\Delta$Iv between the V-phase current command value I1v* and the motor current $i1_v$ is calculated at the subtracting section 167A, and the deviation $\Delta$Iw between the W-phase current command value I1w* and the motor current $i1_w$ is calculated at the subtracting section 168A (Step S230). The PI-control section 163A inputs the deviation $\Delta$Iu, and calculates the U-phase voltage command value V1u* by PI-control calculation. The PI-control section 164A inputs the deviation $\Delta$Iv, and calculates the V-phase voltage command value V1v* by PI-control calculation. The PI-control section 165A inputs the deviation $\Delta$Iw, and calculates the W-phase voltage command value V1w* by PI-control calculation (Step S240). The three-phase voltage command value (V1u*, V1v* and V1w*) is outputted to the motor driving section 170A.

According to the same operation as that of the current control section 160A, the current control section 160B also calculates the three-phase current command value (I2u*, I2v* and I2w*) and the three-phase voltage command value (V2u*, V2v* and V2w*) based on the current command value I2m*, the three-phase motor current ($i2_u$, $i2_v$ and $i2_w$), the motor rotational angle $\theta e$, and the motor angular velocity $\omega e$ (Step S50), the three-phase current command value (I2u*, I2v* and I2w*) is outputted to the abnormality detecting section 140, and the three-phase voltage command value (V2u*, V2v* and V2w*) is outputted to the motor driving section 170B.

The abnormality detecting section 140 inputting the three-phase current command values (I1u*, I1v* and I1w*, and I2u*, I2v* and I2w*) inputs also the detected motor current values I1ud, I1vd and I1wd that are detected by the abnormality detecting circuit 181A, and the detected motor current values I2ud, I2vd and I2wd that are detected by the abnormality detecting circuit 181B, and detects the open failure or the short failure of the FETs constituting the inverters 172A and 172B. When the abnormality detecting section 140 detects the abnormality by comparing the detected motor current values I1ud, I1vd and I1wd with the three-phase current command value (I1u*, I1v* and I1w*) (Step S60), the abnormality detecting section 140 outputs the abnormal system cut-off command SAa to the motor driving section 170A (Step S70). When the abnormality detecting section 140 detects the abnormality by comparing the detected motor current values I2ud, I2vd and I2wd with the three-phase current command value (I2u*, I2v* and I2w*) (Step S80), the abnormality detecting section 140 outputs the abnormal system cut-off command SAb to the motor driving section 170B (Step S90). Further, when the abnormality detecting section 140 has outputted the abnormal system cut-off command (s) SAa and/or SAb (Step S100), that is, has detected the abnormality in both or either of the inverters 172A and 172B, the abnormality detecting section 140 outputs the abnormal detection signal AD to the coil temperature estimating section 110 (Step S110). At this time, the abnormality detecting section 140 sets the abnormal detection signal AD to "1" when detecting the abnormality in only the inverter 172A, sets the abnormal detection signal AD to "2" when detecting the abnormality in only the inverter 172B, and sets the abnormal detection signal AD to "3" when detecting the abnormality in both of the inverters 172A and 172B.

The coil temperature estimating section 110 estimates the coil temperatures $T_{U1}'$ to $T_{W1}'$ and $T_{U2}'$ to $T_{W2}'$ based on the substrate temperature $T_E$ detected by the temperature sensor 105, the three-phase motor currents from the motor driving sections 170A and 170B, and the abnormal detection signal AD (Step S120).

When not inputting the abnormal detection signal AD (Step S310), the motor current adjusting section 111 in the coil temperature estimating section 110 outputs the three-phase motor current (the U-phase motor current $i1_u$, the V-phase motor current $i1_v$ and the W-phase motor current $i1_w$) from the motor driving section 170A as the U-phase motor current $i_{u1}$, the V-phase motor current $i_{v1}$ and the W-phase motor current $i_{w1}$ respectively, and outputs the three-phase motor current (the U-phase motor current $i2_u$, the V-phase motor current $i2_v$ and the W-phase motor current $i2_w$) from the motor driving section 170B as the U-phase motor current $i_{u2}$, the V-phase motor current $i_{v2}$ and the W-phase motor current $i_{w2}$ respectively (Step S320). When inputting the abnormal detection signal AD (Step S310), the motor current adjusting section 111 confirms a value of the abnormal detection signal AD (Step S330) . When the value of the abnormal detection signal AD is "1", the motor current adjusting section 111 judges that the abnormality has occurred in the first system, outputs the motor currents $i_{u1}$ to $i_{w1}$ set to zero, and outputs the motor currents $i2_u$ to $i2_w$ as the motor currents $i_{u2}$ to $i_{w2}$ (Step S340). When the value of the abnormal detection signal AD is "2", the motor current adjusting section 111 judges that the abnormality has occurred in the second system, outputs the motor currents $i_{u2}$ to $i_{w2}$ set to zero, and outputs the motor currents $i1_u$ to $i1_w$ as the motor currents $i_{u1}$ to $i_{w1}$ (Step S350). When the value of the abnormal detection signal AD is "3", the motor current adjusting section 111 judges that the abnormality has occurred in both the first system and the second system, gives warning (Step S360), and does not output the motor current.

The motor currents $i_{u1}$, $i_{v1}$, $i_{w1}$, $i_{u2}$, $i_{v2}$ and $i_{w2}$ are inputted into the coil calorific value calculating sections 112A, 112B, 112C, 112D, 112E and 112F respectively, and at the same time, are inputted into the substrate calorific value calculating section 113. The temperature sensor 105 detects the temperature of the control substrate (Step S370), and outputs the substrate temperature $T_E$ to the substrate calorific value calculating section 113 and the coil temperature calculating section 114.

The coil calorific value calculating sections 112A calculates the coil calorific value $Q_{U1}$ by using the motor current $i_{u1}$ and a previously estimated coil temperature $T_{U1p}$ retained in the memory 115A in accordance with the expression 13 (Step S380). Similarly, the coil calorific value calculating sections 112B calculates the coil calorific value $Q_{V1}$ by using the motor current $i_{v1}$ and a coil temperature $T_{V1p}$ retained in the memory 115B in accordance with the expression 14 (Step S390). The coil calorific value calculating sections 112C calculates the coil calorific value $Q_{W1}$ by using the motor current $i_{w1}$ and a coil temperature $T_{W1p}$ retained in the memory 115C in accordance with the expression 15 (Step S400). The coil calorific value calculating sections 112D calculates the coil calorific value $Q_{U2}$ by using the motor current $i_{u2}$ and a coil temperature $T_{U2p}$ retained in the memory 115D in accordance with the expression 16 (Step S410). The coil calorific value calculating sections 112E calculates the coil calorific value $Q_{V2}$ by using the motor current $i_{v2}$ and a coil temperature $T_{V2p}$ retained in the memory 115E in accordance with the expression 17 (Step S420). The coil calorific value calculating sections 112F calculates the coil calorific value $Q_{W2}$ by using the motor current $i_{w2}$ and a coil temperature $T_{W2p}$ retained in the memory 115F in accordance with the expression 18 (Step S430). The reference temperature $T_b$, the coil resistances $R_{U10}$, $R_{V10}$, $R_{W10}$, $R_{U20}$, $R_{V20}$ and $R_{W20}$ at the reference temperature $T_b$, and the temperature coefficients $\alpha_{U1}$, $\alpha_{V1}$, $\alpha_{W1}$, $\alpha_{U2}$, $\alpha_{V2}$ and $\alpha_{W2}$ are preset.

The substrate calorific value calculating section 113 calculates the substrate calorific value $Q_E$ by using the inputted motor currents $i_{u1}$ to $i_{w1}$ and $i_{u2}$ to $i_{w2}$ and the substrate temperature $T_E$ in accordance with the expression 21 (Step S440). The reference temperature $T_b$, the substrate resistance $R_{E0}$ at the reference temperature $T_b$ and the temperature coefficient $\alpha_E$ are preset.

The calorific values $Q_{U1}$ to $Q_{W1}$, $Q_{U2}$ to $Q_{W2}$ and $Q_E$ are inputted into the coil temperature calculating section 114 with the substrate temperature $T_E$.

The outside air temperature estimating section 116 in the coil temperature calculating section 114 calculates the outside air temperature $T_0$ by using the inputted calorific values and substrate temperature $T_E$ in accordance with the expression 29 (Step S450) . The outside air temperature $T_0$ is inputted into the transfer function matrix section 117. The transfer functions $G_{0E}$, $G_{U1E}$ to $G_{W1E}$, $G_{U2E}$ to $G_{W2E}$ and $G_{EE}$ are preset.

The transfer function matrix section 117 calculates the coil temperatures $T_{U1}$ to $T_{W1}$ and to $T_{W2}$ by using the inputted calorific values and outside air temperature $T_0$ in accordance with the transfer function matrix $G_1$ of the expression 30 (Step S460) . The transfer function matrix $G_1$ is preset.

The coil temperatures $T_{U1}$, $T_{V1}$, $T_{W1}$, $T_{U2}$, $T_{V2}$ and $T_{W2}$ are inputted into the adding section 119A, 119B, 119C, 119D, 119E and 119F respectively, and are added to the additional coil temperature $T_{U10}$, $T_{V10}$, $T_{W10}$, $T_{U20}$, $T_{V20}$ and $T_{W20}$ respectively (Step S470). The added results are outputted as the coil temperatures $T_{U1}'$, $T_{V1}'$, $T_{W1}'$ $T_{U2}'$, $T_{V2}'$ and $T_{W2}'$. The coil temperatures $T_{U1}'$ to $T_{W1}'$ and $T_{U2}'$ to $T_{W2}'$ are inputted into the overheat processing section 120, and at the same time, are retained in the memories 115A to 115F respectively (Step S480).

The overheat processing section 120 judges whether the state is the overheating state or not by the coil temperatures $T_{U1}'$ to $T_{W1}'$ and $T_{U2}'$ to $T_{W2}'$ (Step S130), and performs processing for overheat protection when judging the overheating state (Step S140).

In the motor driving section 170A, the three-phase voltage command value (V1u*, V1v* and V1w*) is inputted into the gate driving circuit 173A, and the abnormal system cut-off command SAa is also inputted into the gate driving circuit 173A when the abnormality detecting section 140 has outputted the abnormal system cut-off command SAa. When the three-phase voltage command value is inputted, the gate driving circuit 173A generates the six PWM-signals based on the three-phase voltage command value and the carrier signal of the triangular wave, and outputs the PWM-signals to the inverter 172A. Further, when the abnormal system cut-off command SAa is not inputted, the gate driving circuit 173A outputs the gate signals of high level to the motor current cut-off circuit 180A and the power source cut-off circuit 174A. Herewith, the FETs QA1, QA2 and QA3 of the motor current cut-off circuit 180A become an on-state, conduction becomes possible between the inverter 172A and the first motor winding L1 of the three-phase motor 200, moreover, the FETs QC1 and QC2 of the power source cut-off circuit 174A become an on-state, and a direct current from the battery 103 is supplied to the inverter 172A through the noise filter 104. Therefore, the PWM-signals outputted from the gate driving circuit 173A are inputted into the gates of the FETs Q1 to Q6 of the inverter 172A, and the U-phase current I1u, the V-phase current I1v and the W-phase current I1w are inputted from the connection between the FETs of each of the switching-arms SAu, SAv and SAw into the first motor winding L1 of the three-phase motor 200. When the abnormal system cut-off command SAa has been inputted, the gate driving circuit 173A outputs the gate signals of low level to the motor current cut-off circuit 180A and the power source cut-off circuit 174A. Herewith, the FETs QA1, QA2 and QA3 of the motor current cut-off circuit 180A become an off-state, the conduction to the first motor winding L1 of the three-phase motor 200 is cut off, moreover, the FETs QC1 and QC2 of the power source cut-off circuit 174A become an off-state, and supply of the direct current from the battery 103 to the inverter 172A is cut off.

According to the same operation as that of the motor driving section 170A, the current of each phase inputted into the second motor winding L2 of the three-phase motor 200 is controlled in the motor driving section 170B.

Moreover, the operations of the first system and the second system may interchange in order, or may be performed in parallel. Though the two-phase/three-phase transforming section calculates the three-phase current command value individually, it is possible to calculate the current command value of one phase based on a total value of the current command values of the other two phases. This enables reduction of an operation amount. Further, when the abnormality occurs, it is possible to adjust the current command value calculated at the current command value calculating section 130 in order to suppress a rapid change of an assist torque caused by the cutoff of the motor current.

A second embodiment of the present invention will be described.

The following expressions 31 to 36 are obtained by substituting the expression 29, which is used for calculating the outside air temperature $T_0$ at the coil temperature calculating section 114 of the first embodiment, for the expressions 22 to 27, and arranging the substituted results.

[Expression 31]

$$T_{U1} = G_{U1U1}'Q_{U1} + G_{V1U1}'Q_{V1} + G_{W1U1}'Q_{W1} + G_{U2U1}'Q_{U2} + G_{V2U1}'Q_{V2} + G_{W2U1}'Q_{W2} + G_{EU1}'Q_E + G_{IU1}T_E$$

[Expression 32]

$$T_{V1} = G_{U1V1}'Q_{U1} + G_{V1V1}'Q_{V1} + G_{W1V1}'Q_{W1} + G_{U2V1}'Q_{U2} + G_{V2V1}'Q_{V2} + G_{W2V1}'Q_{W2} + G_{EV1}'Q_E + G_{IV1}T_E$$

[Expression 33]

$$T_{W1} = G_{U1W1}'Q_{U1} + G_{V1W1}'Q_{V1} + G_{W1W1}'Q_{W1} + G_{U2W1}'Q_{U2} + G_{V2W1}'Q_{V2} + G_{W2W1}'Q_{W2} + G_{EW1}'Q_E + G_{IW1}T_E$$

[Expression 34]

$$T_{U2} = G_{U1U2}'Q_{U1} + G_{V1U2}'Q_{V1} + G_{W1U2}'Q_{W1} + G_{U2U2}'Q_{U2} + G_{V2U2}'Q_{V2} + G_{W2U2}'Q_{W2} + G_{EU2}'Q_E + G_{IU2}T_E$$

[Expression 35]

$$T_{V2} = G_{U1V2}'Q_{U1} + G_{V1V2}'Q_{V1} + G_{W1V2}'Q_{W1} + G_{U2V2}'Q_{U2} + G_{V2V2}'Q_{V2} + G_{W2V2}'Q_{W2} + G_{EV2}'Q_E + G_{IV2}T_E$$

[Expression 36]

$$T_{W2} = G_{U1W2}'Q_{U1} + G_{V1W2}'Q_{V1} + G_{W1W2}'Q_{W1} + G_{U2W2}'Q_{U2} + G_{V2W2}'Q_{V2} + G_{W2W2}'Q_{W2} + G_{EW2}'Q_E + G_{IW2}T_E$$

Here, $G_{TB} = G_{0B} / G_{0E}$, $G_{AB}' = G_{AB} - G_{TB}G_{AE}$, and $G_{EB}' = G_{EB} - G_{TB}G_{EE}$ (A and B are any of U1, V1, W1, U2, V2 and W2). Thereby, the calculation of the outside air temperature $T_0$ becomes unnecessary.

A coil temperature calculating section 214 of the second embodiment calculates the coil temperatures by using the above expressions 31 to 36. The configurations other than the coil temperature calculating section 214 are the same as those of the first embodiment. As with the first embodiment, the coil temperature calculating section 214 adds the additional coil temperatures to the coil temperatures estimated in accordance with the above expressions 31 to 36, and calculates the coil temperature $T_{U1}$', $T_{V1}$', $T_{W1}$' $T_{U2}$', $T_{V2}$' and $T_{W2}$'.

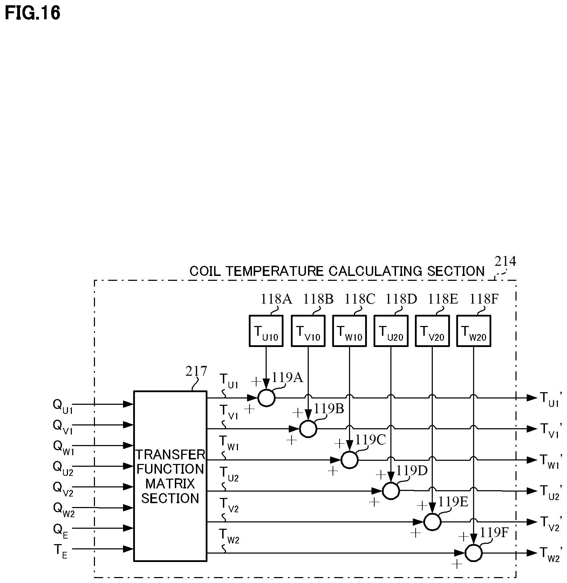

A configuration example of the coil temperature calculating section 214 is shown in FIG. 16. The coil temperature calculating section 214 comprises a transfer function matrix section 217, and the outside air temperature estimating section becomes unnecessary. The transfer function matrix section 217 has a transfer function matrix $G_2$ which performs the calculations of the expressions 31 to 36 and is expressed by the following expression 37, inputs the calorific values $Q_{U1}$ to $Q_{W1}$, $Q_{U2}$ to $Q_{W2}$ and $Q_E$ and the substrate temperature $T_E$, and calculates the coil temperatures $T_{U1}$ to $T_{W1}$ and to $T_{W2}$ by using the transfer function matrix $G_2$.

[Expression 37]

$$
G_2 = \begin{pmatrix}
G_{U1U1}' & G_{V1U1}' & G_{W1U1}' & G_{U2U1}' & G_{V2U1}' & G_{W2U1}' & G_{EU1}' & G_{TU1} \\
G_{U1V1}' & G_{V1V1}' & G_{W1V1}' & G_{U2V1}' & G_{V2V1}' & G_{W2V1}' & G_{EV1}' & G_{TV1} \\
G_{U1W1}' & G_{V1W1}' & G_{W1W1}' & G_{U2W1}' & G_{V2W1}' & G_{W2W1}' & G_{EW1}' & G_{TW1} \\
G_{U1U2}' & G_{V1U2}' & G_{W1U2}' & G_{U2U2}' & G_{V2U2}' & G_{W2U2}' & G_{EU2}' & G_{TU2} \\
G_{U1V2}' & G_{V1V2}' & G_{W1V2}' & G_{U2V2}' & G_{V2V2}' & G_{W2V2}' & G_{EV2}' & G_{TV2} \\
G_{U1W2}' & G_{V1W2}' & G_{W1W2}' & G_{U2W2}' & G_{V2W2}' & G_{W2W2}' & G_{EW2}' & G_{TW2}
\end{pmatrix}
$$

After that, the additional coil temperature $T_{U10}$, $T_{V10}$, $T_{W10}$, $T_{U20}$, $T_{V20}$ and $T_{W20}$ are added to the coil temperatures $T_{U1}$, $T_{V1}$, $T_{W1}$, $T_{U2}$, $T_{V2}$ and $T_{W2}$ at the adding sections 119A, 119B, 119C, 119D, 119E and 119F respectively, and the added results are outputted as the coil temperature $T_{U1}$', $T_{V1}$', $T_{W1}$' $T_{U2}$', $T_{V2}$' and $T_{W2}$' .

Comparing operations of the second embodiment with those of the first embodiment, only the above operation of the coil temperature calculating section is different, and the other operations are the same.

A third embodiment of the present invention will be described.

In the first embodiment, the substrate calorific value $Q_E$ is expressed by using squares of the motor currents of respective phases as shown in the expressions 19 and 21. Therefore, it is possible to consider this substrate calorific value $Q_E$ to be the coil calorific values of respective phases. Based on it, the following expressions 38 to 44 are obtained by considering the coil calorific values $Q_{U1}$ to $Q_{W1}$ and $Q_{U2}$ to $Q_{W2}$ as new coil calorific values, and reconsidering transfer characteristics from the new coil calorific values of respective phases to the coil temperatures of respective phases.

[Expression 38]

$$T_{U1} = G_{U1U1}Q_{U1} + G_{V1U1}Q_{V1} + G_{W1U1}Q_{W1} + G_{U2U1}Q_{U2} + G_{V2U1}Q_{V2} + G_{W2U1}Q_{W2} + G_{0U1}T_0$$

[Expression 39]

$$T_{V1} = G_{U1V1}Q_{U1} + G_{V1V1}Q_{V1} + G_{W1V1}Q_{W1} + G_{U2V1}Q_{U2} + G_{V2V1}Q_{V2} + G_{W2V1}Q_{W2} + G_{0V1}T_0$$

[Expression 40]

$$T_{W1} = G_{U1W1}Q_{U1} + G_{V1W1}Q_{V1} + G_{W1W1}Q_{W1} + G_{U2W1}Q_{U2} + G_{V2W1}Q_{V2} + G_{W2W1}Q_{W2} + G_{0W1}T_0$$

[Expression 41]

$$T_{U2} = G_{U1U2}Q_{U1} + G_{V1U2}Q_{V1} + G_{W1U2}Q_{W1} + G_{U2U2}Q_{U2} + G_{V2U2}Q_{V2} + G_{W2U2}Q_{W2} + G_{0U2}T_0$$

[Expression 42]

$$T_{V2} = G_{U1V2}Q_{U1} + G_{V1V2}Q_{V1} + G_{W1V2}Q_{W1} + G_{U2V2}Q_{U2} + G_{V2V2}Q_{V2} + G_{W2V2}Q_{W2} + G_{0V2}T_0$$

[Expression 43]

$$T_{W2} = G_{U1W2}Q_{U1} + G_{V1W2}Q_{V1} + G_{W1W2}Q_{W1} + G_{U2W2}Q_{U2} + G_{V2W2}Q_{V2} + G_{W2W2}Q_{W2} + G_{0W2}T_0$$

[Expression 44]

$$T_E = G_{U1E}Q_{U1} + G_{V1E}Q_{V1} + G_{W1E}Q_{W1} + G_{U2E}Q_{U2} + G_{V2E}(s)Q_{V2} + G_{W2E}Q_{W2} + G_{0E}T_0$$

The following expression 45 is obtained by solving the above expression 44 for the $T_0$.

[Expression 45]

$$T_0 = \frac{1}{G_{0E}}\left(T_E - G_{U1E}Q_{U1} - G_{V1E}Q_{V1} - G_{W1E}Q_{W1} - G_{U2E}Q_{U2} - G_{V2E}Q_{V2} - G_{W2E}Q_{W2}\right)$$

The third embodiment calculates the coil temperatures by using the expressions 38 to 43 and 45. That is, an outside air temperature estimating section in a coil temperature calculating section estimates the outside air temperature $T_0$ by using the expression 45, and a transfer function matrix section calculates the coil temperature $T_{U1}$ to $T_{W1}$ and to $T_{W2}$ based on the expressions 38 to 43. Therefore, in the third embodiment, a configuration of a coil temperature estimating section is different from that in the first embodiment, and the other configurations are the same as those in the first embodiment.

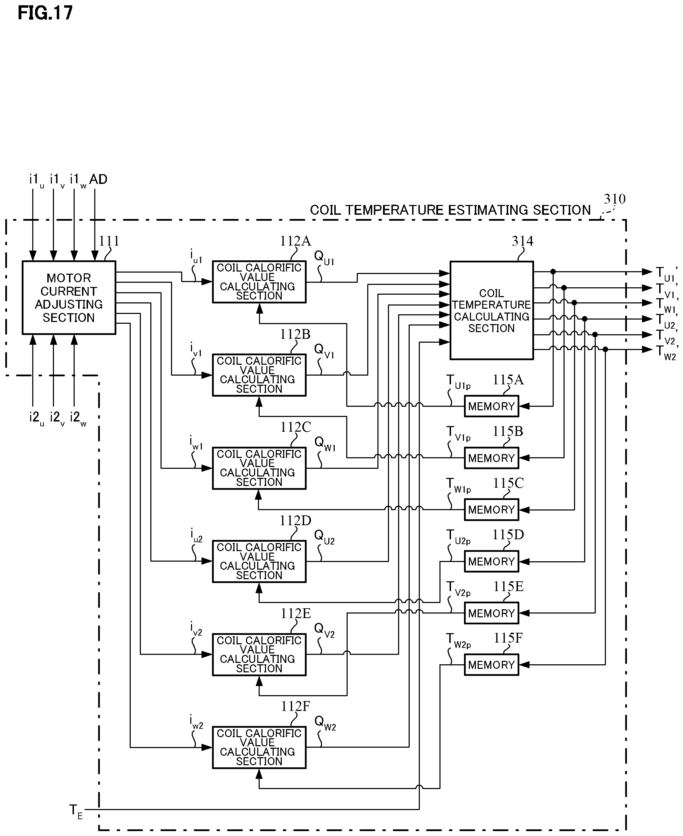

A configuration example of a coil temperature estimating section 310 in the third embodiment is shown in FIG. 17. Compared with the coil temperature estimating section 110 of the first embodiment shown in FIG. 11, the substrate calorific value calculating section 113 calculating the substrate calorific value $Q_E$ is removed, the substrate calorific value $Q_E$ is not inputted into a coil temperature calculating section 314, and the calorific values $Q_{U1}$ to $Q_{W1}$ and $Q_{U2}$ to $Q_{W2}$ and the substrate temperature $T_E$ are inputted into it.

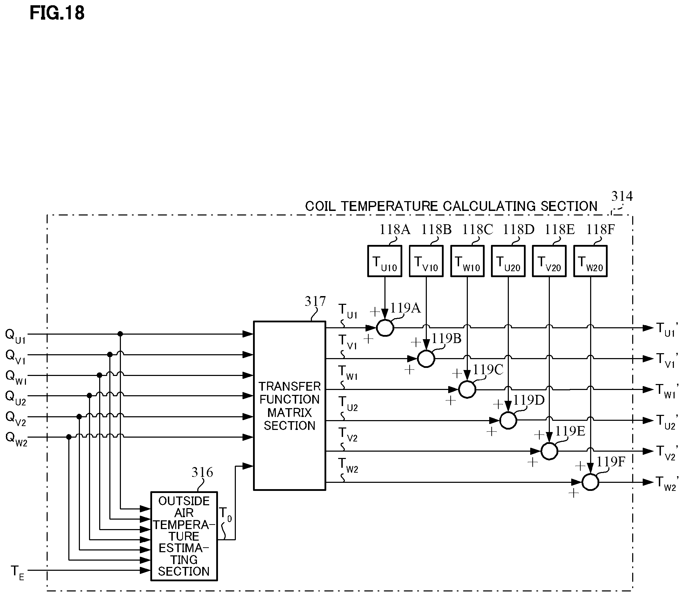

A configuration example of the coil temperature calculating section 314 is shown in FIG. 18. Compared with the coil temperature calculating section 114 of the first embodiment shown in FIG. 12, the substrate calorific value $Q_E$ is not inputted into an outside air temperature estimating section 316 and a transfer function matrix section 317. The outside air temperature estimating section 316 has the outside air frequency characteristic (transfer function) $G_{0E}$ and the calorific value frequency characteristics (transfer functions) $G_{U1E}$ to $G_{W1E}$ and $G_{U2E}$ to $G_{W2E}$, inputs the calorific values $Q_{U1}$ to $Q_{W1}$ and $Q_{U2}$ to $Q_{W2}$ and the substrate temperature $T_E$, and estimates the outside air temperature $T_0$ by using the expression 45. The transfer function matrix section 317 has a transfer function matrix $G_3$ which performs the calculations of the expressions 38 to 43 and is expressed by the following expression 46, inputs the calorific values $Q_{U1}$ to $Q_{W1}$ and $Q_{U2}$ to $Q_{W2}$ and the outside air temperature $T_0$ estimated at the outside air temperature estimating section 316, and calculates the coil temperatures $T_{U1}$ to $T_{W1}$ and $T_{U2}$ to $T_{W2}$ by using the transfer function matrix $G_3$.

[Expression 46]

$$G_3 = \begin{pmatrix} G_{U1U1} & G_{V1U1} & G_{W1U1} & G_{U2U1} & G_{V2U1} & G_{W2U1} & G_{0U1} \\ G_{U1V1} & G_{V1V1} & G_{W1V1} & G_{U2V1} & G_{V2V1} & G_{W2V1} & G_{0V1} \\ G_{U1W1} & G_{V1W1} & G_{W1W1} & G_{U2W1} & G_{V2W1} & G_{W2W1} & G_{0W1} \\ G_{U1U2} & G_{V1U2} & G_{W1U2} & G_{U2U2} & G_{V2U2} & G_{W2U2} & G_{0U2} \\ G_{U1V2} & G_{V1V2} & G_{W1V2} & G_{U2V2} & G_{V2V2} & G_{W2V2} & G_{0V2} \\ G_{U1W2} & G_{V1W2} & G_{W1W2} & G_{U2W2} & G_{V2W2} & G_{W2W2} & G_{0W2} \end{pmatrix}$$

After that, the coil temperature calculating section 314 outputs the coil temperature $T_{U1}'$, $T_{V1}'$, $T_{W1}'$ $T_{U2}'$, $T_{V2}'$ and $T_{W2}'$ by the same operations as those of the first embodiment.

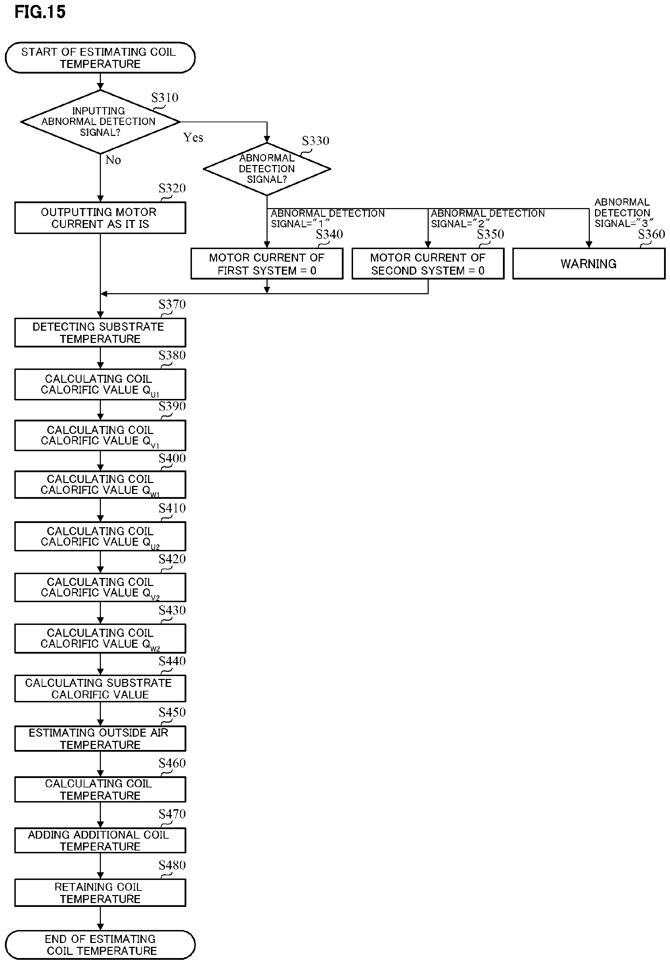

Comparing operations of the third embodiment with those of the first embodiment, in the operating example of the coil temperature estimation shown in FIG. 15, the operation for calculating the substrate calorific value $Q_E$ (Step S440) is removed, and the operation for calculating the outside air temperature $T_0$ (Step S450) and the operation for calculating the coil temperatures $T_{U1}$ to $T_{W1}$ and $T_{U2}$ to $T_{W2}$ (Step S460) are different as described above. The other operations are the same.

A fourth embodiment of the present invention will be described.

In the calculation of the outside air temperature $T_0$ by the coil temperature calculating section 314 of the third embodiment, the same changes of expressions as those in the second embodiment can be performed. That is, the following expressions 47 to 52 are obtained by substituting the expression 45 for the expressions 38 to 43, and arranging the substituted results.

[Expression 47]

$$T_{U1} = G_{U1U1}'Q_{U1} + G_{V1U1}'Q_{V1} + G_{W1U1}'Q_{W1} + G_{U2U1}'Q_{U2} + G_{V2U1}'Q_{V2} + G_{W2U1}'Q_{W2} + G_{TU1}T_E$$

[Expression 48]

$$T_{V1} = G_{U1V1}'Q_{U1} + G_{V1V1}'Q_{V1} + G_{W1V1}'Q_{W1} + G_{U2V1}'Q_{U2} + G_{V2V1}'Q_{V2} + G_{W2V1}'Q_{W2} + G_{TV1}T_E$$

[Expression 49]

$$T_{W1} = G_{U1W1}'Q_{U1} + G_{V1W1}'Q_{V1} + G_{W1W1}'Q_{W1} + G_{U2W1}'Q_{U2} + G_{V2W1}'Q_{V2} + G_{W2W1}'Q_{W2} + G_{TW1}T_E$$

[Expression 50]

$$T_{U2} = G_{U1U2}'Q_{U1} + G_{V1U2}'Q_{V1} + G_{W1U2}'Q_{W1} + G_{U2U2}'Q_{U2} + G_{V2U2}'Q_{V2} + G_{W2U2}'Q_{W2} + G_{TU2}T_E$$

[Expression 51]

$$T_{V2} = G_{U1V2}'Q_{U1} + G_{V1V2}'Q_{V1} + G_{W1V2}'Q_{W1} + G_{U2V2}'Q_{U2} + G_{V2V2}'Q_{V2} + G_{W2V2}'Q_{W2} + G_{TV2}T_E$$

[Expression 52]

$$T_{W2} = G_{U1W2}'Q_{U1} + G_{V1W2}'Q_{V1} + G_{W1W2}'Q_{W1} + G_{U2W2}'Q_{U2} + G_{V2W2}'Q_{V2} + G_{W2W2}'Q_{W2} + G_{TW2}T_E$$

A coil temperature calculating section 414 of the fourth embodiment calculates the coil temperatures $T_{U1}$ to $T_{W1}$ and $T_{U2}$ to $T_{W2}$ by using the above expressions 47 to 52, adds the additional coil temperatures to the coil temperatures, and outputs the coil temperature $T_{U1}'$ to $T_{W1}'$ and $T_{U2}'$ to $T_{W2}'$. The other configurations are the same as those of the third embodiment.

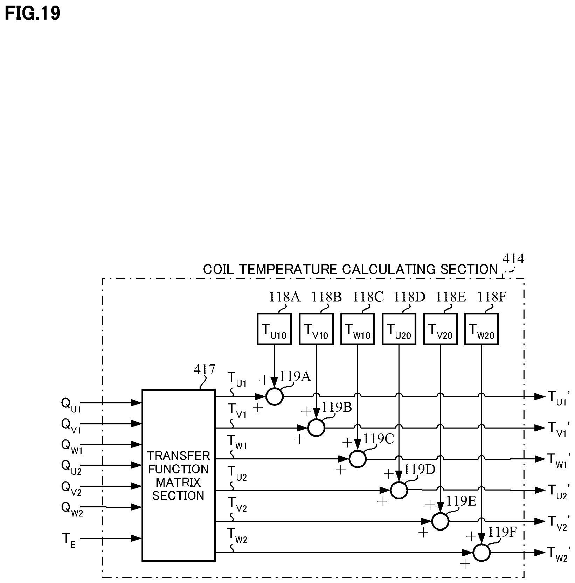

A configuration example of the coil temperature calculating section 414 is shown in FIG. 19. The coil temperature calculating section 414 comprises a transfer function matrix section 417. The transfer function matrix section 417 has a transfer function matrix $G_4$ which performs the calculations of the expressions 47 to 52 and is expressed by the following expression 53, inputs the calorific values $Q_{U1}$ to $Q_{W1}$ and $Q_{U2}$ to $Q_{W2}$ and the substrate temperature $T_E$, and calculates the coil temperatures $T_{U1}$ to $T_{W1}$ and $T_{U2}$ to $T_{W2}$ by using the transfer function matrix $G_4$.

[Expression 53]

$$
G_4 = \begin{pmatrix}
G_{U1U1}' & G_{V1U1}' & G_{W1U1}' & G_{U2U1}' & G_{V2U1}' & G_{W2U1}' & G_{TU1} \\
G_{U1V1}' & G_{V1V1}' & G_{W1V1}' & G_{U2V1}' & G_{V2V1}' & G_{W2V1}' & G_{TV1} \\
G_{U1W1}' & G_{V1W1}' & G_{W1W1}' & G_{U2W1}' & G_{V2W1}' & G_{W2W1}' & G_{TW1} \\
G_{U1U2}' & G_{V1U2}' & G_{W1U2}' & G_{U2U2}' & G_{V2U2}' & G_{W2U2}' & G_{TU2} \\
G_{U1V2}' & G_{V1V2}' & G_{W1V2}' & G_{U2V2}' & G_{V2V2}' & G_{W2V2}' & G_{TV2} \\
G_{U1W2}' & G_{V1W2}' & G_{W1W2}' & G_{U2W2}' & G_{V2W2}' & G_{W2W2}' & G_{TW2}
\end{pmatrix}
$$

After that, the additional coil temperature $T_{U10}$, $T_{V10}$, $T_{W10}$, $T_{U20}$, $T_{V20}$ and $T_{W20}$ are added to the coil temperatures at the adding sections 119A, 119B, 119C, 119D, 119E and 119F respectively, and outputs the added results as the coil temperature $T_{U1}'$, $T_{V1}'$, $T_{W1}'$ $T_{U2}'$, $T_{V2}'$ and $T_{W2}'$.

Comparing operations of the fourth embodiment with those of the third embodiment, only the above operation of the coil temperature calculating section is different, and the other operations are the same.

The transfer function matrix section and the outside air temperature estimating section may be achieved with a configuration of a logic circuit, may be achieved as a program in a CPU, or may be achieved with a combination of them. Further, although the present embodiments target the three-phase motor, the embodiments can be applied to a motor where the number of phases is other than three. The number of systems is not also limited to two, and the embodiments can be applied to a motor consisting of three or more systems. In the case of three or more systems, the term number of the expression for calculating the outside air temperature and the order number of the transfer function matrix for calculating the coil temperature correspond to the number of the systems, and frequency characteristics corresponding to the number are obtained in advance.

A fifth embodiment of the present invention will be described.

Although the coil temperature estimating sections in the first to fourth embodiments calculate the coil calorific values for respective systems, and estimate the coil temperatures for respective systems, it is possible to integrate all systems for each phase, calculate a coil calorific value for the all systems based on a motor current of one system, and estimate a coil temperature for the all systems. When the abnormality occurs in one of the systems, the coil calorific value obtained in a normal system is corrected, and the coil temperature is estimated based on the corrected coil calorific value. The fifth embodiment achieves that function.

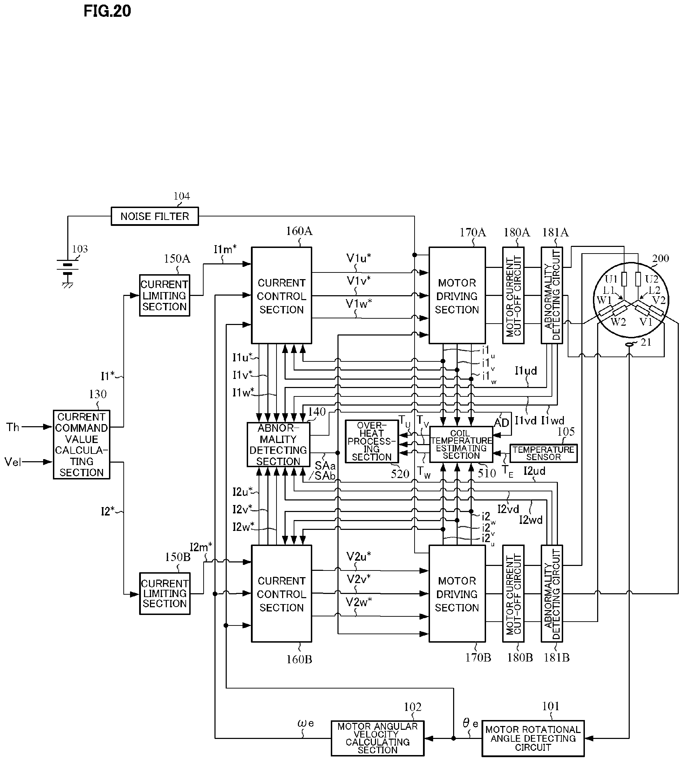

A configuration example of the fifth embodiment is shown in FIG. 20. Compared with the configuration example of the first embodiment shown in FIG. 6, in the fifth embodiment, the coil temperature estimating section 110 and the overheat processing section 120 are changed for a coil temperature estimating section 510 and an overheat processing section 520 respectively, and coil temperatures $T_U$, $T_V$ and $T_W$ are outputted from the coil temperature estimating section 510 to the overheat processing section 520. The other configurations are the same as those of the first embodiment, and the explanation is omitted.

The coil temperature estimating section 510 estimates coil temperatures $T_u$, $T_v$ and $T_w$ of respective phases based on the three-phase motor current from the motor driving section 170A or the motor driving section 170B when the abnormality does not occur in all of the systems and the systems are normal, or the three-phase motor current of a normal system when the abnormality occurs in one of the systems, in addition to the substrate temperature $T_E$ from the temperature sensor 105. The system where the abnormality occurs is judged by the abnormal detection signal AD from the abnormality detecting section 140. The present embodiment estimates the coil temperature based on the three-phase motor current from the motor driving section 170A at the normal time.

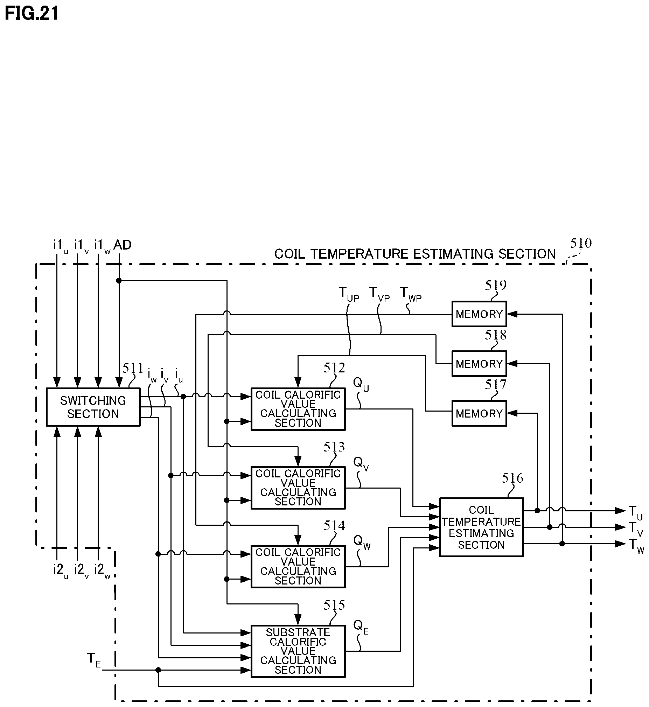

A configuration example of the coil temperature estimating section 510 is shown in FIG. 21. The coil temperature estimating section 510 comprises a switching section 511, coil calorific value calculating sections 512, 513 and 514, a substrate calorific value calculating section 515, a coil temperature calculating section 516, and memories 517, 518 and 519.

The switching section 511 inputs the three-phase motor current from the motor driving section 170A and the three-phase motor current from the motor driving section 170B, and selects the motor current used for the estimation of the coil temperature. At the normal time, the switching section 511 selects the three-phase motor current (the U-phase motor current $i1_u$, the V-phase motor current $i1_v$ and the W-phase motor current $i1_w$) from the motor driving section 170A, and outputs it as a U-phase motor current $i_u$, a V-phase motor current $i_v$ and a W-phase motor current $i_w$. At the abnormal time, the switching section 511 judges a system where the abnormality occurs by the abnormal detection signal AD, and outputs the three-phase motor current from the motor driving section in a normal system as the U-phase motor current $i_u$, the V-phase motor current $i_v$ and the W-phase motor current $i_w$.

The coil calorific value calculating sections 512, 513 and 514 respectively calculate calorific values of coils (coil calorific values) $Q_U$, $Q_V$ and $Q_W$ in respective phases. Methods to calculate the coil calorific value are different between at the normal time and at the abnormal time. It is judged whether the systems are normal or abnormal based on existence or nonexistence of input of the abnormal detection signal AD outputted from the abnormality detecting section 140.

First, the calculation of the coil calorific value at the normal time will be described.

Though a calorific value can be obtained from an expression of electric power occurring in a resistance as with the first embodiment, a resistance of a coil (a coil resistance) in each phase is changed depending on the coil temperature in each phase, so that the calorific values $Q_U$, $Q_V$ and $Q_W$ are calculated in accordance with the following expressions 54 to 56 by dealing with the coil resistance as a function of the coil temperature.

[Expression 54]

$$Q_U = R_U(T_U) \times i_u(t)^2$$

[Expression 55]

$$Q_V = R_V(T_V) \times i_v(t)^2$$

[Expression 56]

$$Q_W = R_W(T_W) \times i_w(t)^2$$

Here, $R_U(T_U)$, $R_V(T_V)$ and $R_W(T_W)$ are the coil resistances of the U-phase, the V-phase and the W-phase respectively, and are converted into the sum of those in both systems (the first system and the second system). $T_U$, $T_V$ and $T_W$ are the coil temperatures of the U-phase, the V-phase and the W-phase respectively. The motor currents $i_u$, $i_v$ and $i_w$ are expressed as functions of time t.

Moreover, the coil resistances $R_U(T)$, $R_V(T)$ and $R_W(T)$ in the case that the coil temperature is T, can be calculated in accordance with the following expressions 57 to 59 when the coil resistances at a reference temperature $T_b$ are $R_{U0}$, $R_{V0}$ and $R_{W0}$ respectively.

[Expression 57]

$$R_U(T) = R_{U0} \times \left\{1 + \alpha_U \times (T - T_b)\right\}$$

[Expression 58]

$$R_V(T) = R_{V0} \times \left\{1 + \alpha_V \times (T - T_b)\right\}$$

[Expression 59]

$$R_W(T) = R_{W0} \times \left\{ 1 + \alpha_W \times \left( T - T_b \right) \right\}$$

Here, $\alpha_U$, $\alpha_V$ and $\alpha_W$ are temperature coefficients of the U-phase, the V-phase and the W-phase respectively.

The calorific values $Q_U$, $Q_V$ and $Q_W$ can be calculated in accordance with the following expressions 60 to 62 by substituting the expressions 57 to 59 for the expressions 54 to 56 respectively.

[Expression 60]

$$Q_U = R_{U0} \times \left\{ 1 + \alpha_U \times \left( T_U - T_b \right) \right\} \times i_u(t)^2$$

[Expression 61]

$$Q_V = R_{V0} \times \left\{ 1 + \alpha_V \times \left( T_V - T_b \right) \right\} \times i_v(t)^2$$

[Expression 62]

$$Q_W = R_{W0} \times \left\{ 1 + \alpha_W \times \left( T_W - T_b \right) \right\} \times i_w(t)^2$$

At the normal time, the coil calorific value calculating sections 512, 513 and 514 calculate the calorific values $Q_U$, $Q_V$ and $Q_W$ by using the above expressions 60 to 62 respectively.

Next, the calculation of the coil calorific value (a corrected coil calorific value) at the abnormal time when the abnormality occurs in one of the systems, will be described.

When the abnormality occurs in one of the systems, a current passes through only normal system, so that calorific values obtained by multiplying the calorific values in the normal state by a gain β (0 < β < 1) are used as shown by the following expressions 63 to 65.

[Expression 63]

$$Q_U = \beta \times R_U(T_U) \times i_u(t)^2$$

[Expression 64]

$$Q_V = \beta \times R_V(T_V) \times i_v(t)^2$$

[Expression 65]

$$Q_W = \beta \times R_W(T_W) \times i_w(t)^2$$

The motor currents $i_u$, $i_v$ and $i_w$ are motor currents in the system through which a current normally passes, and the gain β is obtained by an experiment in advance. For example, at the normal time, a current is not made pass through one system but is made pass through only the other system, and the gain β is set to a value by which a detected value and an estimated value of a temperature of a coil through which a current passes become the closest. It is possible to simply set β = 0.5 without the experiment.

The calorific values $Q_U$, $Q_V$ and $Q_W$ can be calculated in accordance with the following expressions 66 to 68 by substituting the expressions 57 to 59 for the expressions 63 to 65 respectively.

[Expression 66]

$$Q_U = \beta \times R_{U0} \times \left\{ 1 + \alpha_U \times \left( T_U - T_b \right) \right\} \times i_u(t)^2$$

[Expression 67]

$$Q_V = \beta \times R_{V0} \times \left\{ 1 + \alpha_V \times \left( T_V - T_b \right) \right\} \times i_v(t)^2$$

[Expression 68]

$$Q_W = \beta \times R_{W0} \times \left\{ 1 + \alpha_W \times \left( T_W - T_b \right) \right\} \times i_w(t)^2$$

At the abnormal time, the coil calorific value calculating sections 512, 513 and 514 calculate the calorific values $Q_U$, $Q_V$ and $Q_W$ by using the above expressions 66 to 68 respectively.

Though the substrate calorific value calculating section 515 also calculates a calorific value of the control substrate (a substrate calorific value) $Q_E$ from an expression of electric power occurring in a resistance, it obtains a magnitude of a current needed for the calculation by the motor currents $i_u$, $i_v$ and $i_w$. A calorific equivalent resistance of the control substrate (a substrate resistance) $R_E(T_E)$ is changed depending on a temperature (a substrate temperature $T_E$ in the case of the control substrate) as with the coil resistance. Further, as described above, since the control substrate has heating corresponding to standby power such as feeble heating of a semiconductor switching element and heating caused by operations of a microcomputer or other semiconductors without a current passing through the coil in a state where an ignition is turned on, it is necessary to consider it in the calculation of the calorific value. Consequently, the calorific value $Q_E$ of the control substrate at the normal time is calculated in accordance with the following expression 69.

[Expression 69]

$$Q_E = R_E(T_E) \times \left( i_u(t)^2 + i_v(t)^2 + i_w(t)^2 \right) + Q_{E0}$$

Here, $Q_{E0}$ is a calorific value corresponding to standby power.

The calorific value of the control substrate (a corrected substrate calorific value) $Q_E$ at the abnormal time is calculated in accordance with the following expression 70 based on calculation of multiplying the calorific value in the normal state by a gain.

[Expression 70]

$$Q_E = \beta \times R_E(T_E) \times \left( i_u(t)^2 + i_v(t)^2 + i_w(t)^2 \right) + Q_{E0}$$

The substrate resistance $R_E(T)$ in the case that the substrate temperature is $T$ is calculated by using the substrate resistance $R_{E0}$ at the reference temperature $T_b$ and the temperature coefficient $\alpha_E$ of the control substrate in accordance with the following expression 71, so that the calorific values $Q_E$ at the normal time and at the abnormal time can be respectively calculated in accordance with the following expressions 72 and 73 by substituting the expression 71 for the expressions 69 and 70.

[Expression 71]

$$R_E(T) = R_{E0} \times \left\{ 1 + \alpha_E \times \left( T - T_b \right) \right\}$$

[Expression 72]

$$Q_E = R_{E0} \times \left\{ 1 + \alpha_E \times \left( T_E - T_b \right) \right\} \times \left( i_u(t)^2 + i_v(t)^2 + i_w(t)^2 \right) + Q_{E0}$$

[Expression 73]

$$Q_E = \beta \times R_{E0} \times \left\{ 1 + \alpha_E \times \left( T_E - T_b \right) \right\} \times \left( i_u(t)^2 + i_v(t)^2 + i_w(t)^2 \right) + Q_{E0}$$

The substrate calorific value calculating section 515 calculates the calorific value $Q_E$ by using the above expressions 72 and 73.

A coil temperature calculating section 516 calculates the coil temperatures $T_U$, $T_V$ and $T_W$ in respective phases from the calorific values $Q_U$, $Q_V$, $Q_W$ and $Q_E$ and the substrate temperature $T_E$. Derivation of expressions to calculate them will be described.

Transfer functions from the calorific values $Q_U$, $Q_V$, $Q_W$ and $Q_E$ and the outside air temperature $T_0$ to the coil temperatures $T_U$, $T_V$ and $T_W$ in respective phases and the substrate temperature $T_E$ can be expressed by the following expressions 74 to 77.

[Expression 74]

$$T_U = G_{UU}(s)Q_U + G_{VU}(s)Q_V + G_{WU}(s)Q_W + G_{EU}(s)Q_E + G_{0U}(s)T_0$$

[Expression 75]

$$T_V = G_{UV}(s)Q_U + G_{VV}(s)Q_V + G_{WV}(s)Q_W + G_{EV}(s)Q_E + G_{0V}(s)T_0$$

[Expression 76]

$$T_W = G_{UW}(s)Q_U + G_{VW}(s)Q_V + G_{WW}(s)Q_W + G_{EW}(s)Q_E + G_{0W}(s)T_0$$

[Expression 77]

$$T_E = G_{UE}(s)Q_U + G_{VE}(s)Q_V + G_{WE}(s)Q_W + G_{EE}(s)Q_E + G_{0E}(s)T_0$$

Here, $G_{XY}(s)$ is a frequency characteristic (a calorific value frequency characteristic) from a calorific value $Q_X$ to a coil temperature $T_Y$ in a Y-phase (X and Y are any of U, V, W and E), $G_{0X}$ is a frequency characteristic (an outside air temperature frequency characteristic) from the outside air temperature $T_0$ to a coil temperature $T_X$ in a X-phase (X is any of U, V, W and E), and the control substrate is regarded as an E-phase to simplify the explanation. In the case that a relationship between a group of the calorific value and the outside air temperature and the temperature (the coil temperature or the substrate temperature) in each phase is approximately a linear combination, the above frequency characteristic is defined as a transfer function having a predetermined value.

The following expressions 78 to 80 are obtained by solving the above expression 77 for $T_0$, substituting the result for the above expressions 74 to 76, and arranging the substituted results (hereinafter, "(s)" is omitted to make the expression easy to see by simplification).

[Expression 78]

$$T_U = G_{UU}'Q_U + G_{VU}'Q_V + G_{WU}'Q_W + G_{EU}'Q_E + G_{TU}T_E$$

[Expression 79]

$$T_V = G_{UV}'Q_U + G_{VV}'Q_V + G_{WV}'Q_W + G_{EV}'Q_E + G_{TV}T_E$$

[Expression 80]

$$T_W = G_{UW}{}'Q_U + G_{VW}{}'Q_V + G_{WW}{}'Q_W + G_{EW}{}'Q_E + G_{TW}T_E$$

Here, $G_{TB} = G_{0B} / G_{0E}$, $G_{AB}' = G_{AB} - G_{TB}G_{AE}$, and $G_{EB}' = G_{EB} - G_{TB}G_{EE}$ (A and B are any of U, V and W).

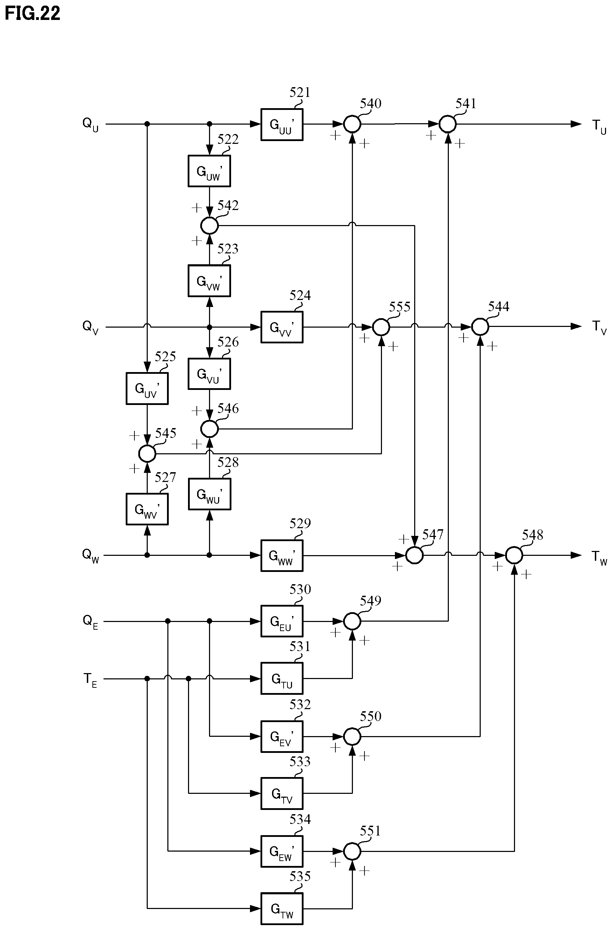

FIG. 22 expresses the above expressions 78 to 80 with a block diagram. The coil temperature calculating section 516 calculates the coil temperatures $T_U$, $T_V$ and $T_W$ from the calorific values $Q_U$, $Q_V$, $Q_W$ and $Q_E$ and the substrate temperature $T_E$ in accordance with the configuration shown in FIG. 22. That is, the coil temperature calculating section 516 performs multiplications to the inputted coil calorific values $Q_U$ in the expressions 78 to 80 at calculating sections 521, 525 and 522, multiplications to the coil calorific values $Q_V$ in the expressions 78 to 80 at calculating sections 526, 524 and 523, multiplications to the coil calorific values $Q_W$ in the expressions 78 to 80 at calculating sections 528, 527 and 529, multiplications to the substrate calorific values $Q_E$ in the expressions 78 to 80 at calculating sections 530, 532 and 534, and multiplications to the substrate temperature $T_E$ in the expressions 78 to 80 at calculating sections 531, 533 and 535. To the results of the multiplications, the coil temperature calculating section 516 performs additions in the expression 78 at adding sections 540, 541, 546 and 549, additions in the expression 79 at adding sections 543, 544, 545 and 550, and additions in the expression 80 at adding sections 542, 547, 548 and 551. Outputs from the adding sections 541, 544 and 548 become the coil temperatures $T_U$, $T_V$ and $T_W$ respectively.

The coil temperatures $T_U$, $T_V$ and $T_W$ are inputted into the overheat processing section 520, and at the same time, are retained in memories 517, 518 and 519 respectively to be used for the next calculation of the calorific value at the coil calorific value calculating sections 512, 513 and 514.

As with the overheat processing section 120, the overheat processing section 520 performs, for example, processing at the abnormality judging section 25 and the motor current limiting section 23 described in the publication of Japanese Patent No.4356295 B2. That is, as with the processing at the abnormality judging section 25, the overheat processing section 520 judges whether the coil temperatures $T_U$, $T_V$ and $T_W$ exceed the preset tolerance limit temperature of the three-phase motor 200 or not, and judges that the three-phase motor 200 is overheated when they exceed it. When judging the overheating state, the overheat processing section 520 gradually decreases the current command value with the elapse of time and gradually decreases the motor current with the elapse of time as with the processing at the motor current limiting section 23, or sets the current command value to zero and cuts off the motor current. It is possible to mount the temperature detecting circuit 31 and the temperature detecting section 26 described in the same publication and judge the abnormality of the temperature detecting circuit 31.

Comparing operations of the fifth embodiment with those of the first embodiment, operations of the coil temperature estimating section and the overheat processing section are different.

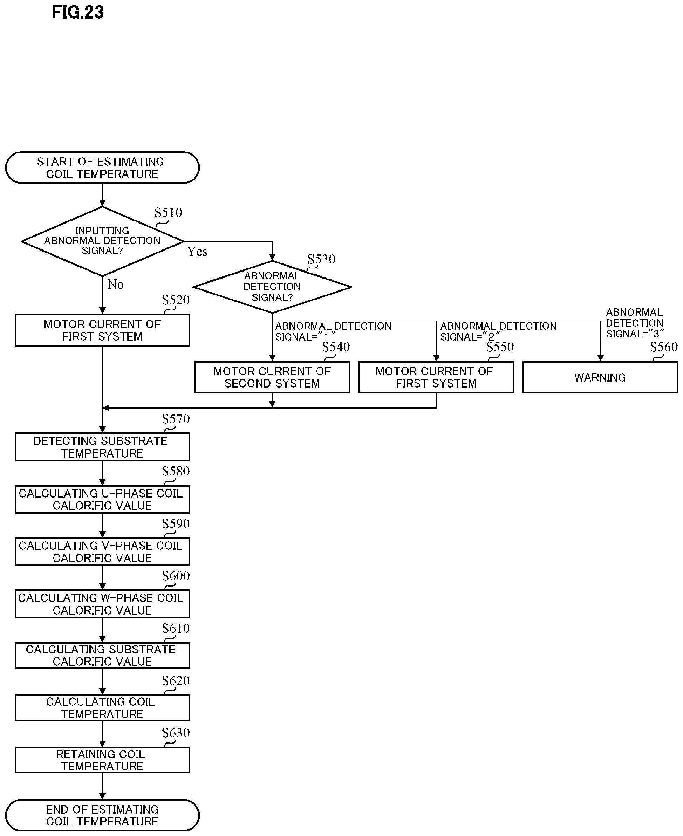

An operating example of the coil temperature estimating section 510 will be described with reference to a flowchart in FIG. 23.

The coil temperature estimating section 510 estimates the coil temperatures $T_u$, $T_v$ and $T_w$ of respective phases based on the substrate temperature $T_E$ detected by the temperature sensor 105, the three-phase motor current and the abnormal detection signal AD.

When not inputting the abnormal detection signal AD (Step S510), the switching section 511 in the coil temperature estimating section 510 outputs the three-phase motor current (the U-phase motor current $i1_u$, the V-phase motor current $i1_v$ and the W-phase motor current $i1_w$) from the motor driving section 170A as the U-phase motor current $i_u$, the V-phase motor current $i_v$ and the W-phase motor current $i_w$ respectively (Step S520). When inputting the abnormal detection signal AD (Step S510), the switching section 511 confirms a value of the abnormal detection signal AD (Step S530). When the value of the abnormal detection signal AD is "1", the switching section 511 judges that the abnormality has occurred in the first system, and outputs the three-phase motor current (the U-phase motor current $i2_u$, the V-phase motor current $i2_v$ and the W-phase motor current $i2_w$) from the motor driving section 170B as the U-phase motor current $i_u$, the V-phase motor current $i_v$ and the W-phase motor current $i_w$ respectively (Step S540). When the value of the abnormal detection signal AD is "2", the switching section 511 judges that the abnormality has occurred in the second system, and outputs the three-phase motor current from the motor driving section 170A as the U-phase motor current $i_u$, the V-phase motor current $i_v$ and the W-phase motor current $i_w$ respectively (Step S550). When the value of the abnormal detection signal AD is "3", the switching section 511 judges that the abnormality has occurred in both the first system and the second system, gives warning (Step S560), and does not output the motor current.

The U-phase motor current $i_u$, the V-phase motor current $i_v$ and the W-phase motor current $i_w$ are inputted into the coil calorific value calculating sections 512, 513 and 514 respectively, and at the same time, are inputted into the substrate calorific value calculating section 515. The temperature sensor 105 detects the temperature of the control substrate (Step S570), and outputs the substrate temperature $T_E$ to the substrate calorific value calculating section 515 and the coil temperature calculating section 516.

The coil calorific value calculating sections 512 calculates the coil calorific value $Q_U$ in the U-phase by using the U-phase motor current $i_u$ and a previously estimated coil temperature $T_{UP}$ retained in the memory 517 in accordance with the expression 60 in the case of not inputting the abnormal detection signal AD or the expression 66 in the case of inputting it (Step S580). Similarly, the coil calorific value calculating sections 513 calculates the coil calorific value $Q_V$ in the V-phase by using the V-phase motor current $i_v$ and a coil temperature $T_{VP}$ retained in the memory 518 in accordance with the expression 61 in the case of not inputting the abnormal detection signal AD or the expression 67 in the case of inputting it (Step S590), and the coil calorific value calculating sections 514 calculates the coil calorific value $Q_W$ in the W-phase by using the W-phase motor current $i_w$ and a coil temperature $T_{WP}$ retained in the memory 519 in accordance with the expression 62 in the case of not inputting the abnormal detection signal AD or the expression 68 in the case of inputting it (Step S600) . The reference temperature $T_b$, the coil resistances $R_{U0}$, $R_{V0}$ and $R_{W0}$ at the reference temperature $T_b$ and the temperature coefficients $\alpha_U$, $\alpha_V$ and $\alpha_W$ are preset.

The substrate calorific value calculating section 515 calculates the substrate calorific value $Q_E$ by using the inputted motor currents ($i_u$, $i_v$ and $i_w$) and the substrate temperature $T_E$ in accordance with the expression 72 in the case of not inputting the abnormal detection signal AD or the expression 73 in the case of inputting it (Step S610). The reference temperature $T_b$, the substrate resistance $R_{E0}$ at the reference temperature $T_b$, the temperature coefficient $\alpha_E$ and the calorific value $Q_{E0}$ are preset.

The calorific values $Q_U$, $Q_V$, $Q_W$ and $Q_E$ are inputted into the coil temperature calculating section 516 with the substrate temperature $T_E$. The coil temperature calculating section 516 calculates the coil temperatures $T_U$, $T_V$ and $T_W$ by the calorific values Qu, Qv, $Q_W$ and $Q_E$ and the substrate temperature $T_E$ base on the expressions 78 to 80 (Step S620). The coil temperatures $T_U$, $T_V$ and $T_W$ are inputted into the overheat processing section 520, and at the same time, are retained in the memories 517, 518 and 519 respectively (Step S630).

The overheat processing section 520 judges whether the state is the overheating state or not by the coil temperatures $T_U$, $T_V$ and $T_W$, and performs processing for overheat protection when judging the overheating state.

A sixth embodiment of the present invention will be described.

Though a whole configuration of the sixth embodiment is similar to that of the fifth embodiment, a configuration of the coil temperature calculating section in the coil temperature estimating section is different.

The setting shown by the following expression 81 can be applied to the expressions 78 to 80 which the calculation at the coil temperature calculating section 516 of the fifth embodiment is based on because of symmetry of the phases.

[Expression 81]

$$G_{UU}' = G_{VV}' = G_{WW}' = G_L$$

$$G_{UV}' = G_{VU}' = G_{UW}' = G_{WU}' = G_{VW}' = G_{WV}' = G_M$$

$$G_{EU}' = G_{EV}' = G_{EW}' = G_E$$

$$G_{TU} = G_{TV} = G_{TW} = G_{TE}$$

The following expressions 82 to 84 are obtained by substituting the above expression 81 for the expressions 78 to 80, and arranging the substituted results.

[Expression 82]

$$T_U = G_L Q_U + G_M \left( Q_V + Q_W \right) + G_E Q_E + G_{TE} T_E$$

[Expression 83]

$$T_V = G_L Q_V + G_M \left( Q_W + Q_U \right) + G_E Q_E + G_{TE} T_E$$

[Expression 84]

$$T_W = G_L Q_W + G_M \left( Q_U + Q_V \right) + G_E Q_E + G_{TE} T_E$$

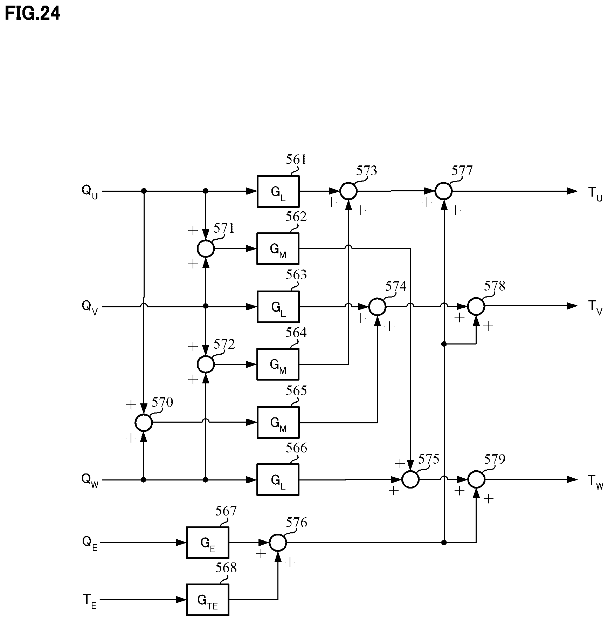

FIG. 24 expresses the above expressions 82 to 84 with a block diagram, and the coil temperature calculating section of the sixth embodiment calculates the coil temperatures $T_U$, $T_V$ and $T_W$ from the coil calorific values $Q_U$, $Q_V$,

$Q_W$ and $Q_E$ and the substrate temperature $T_E$ in accordance with the configuration shown in FIG. 24. That is, the coil temperature calculating section performs multiplications of $G_L$ to the coil calorific values $Q_U$, Qv and Qw at calculating sections 561, 563 and 566 respectively, additions shown in the parentheses of the expressions 82 to 84 at adding sections 572, 570 and 571 respectively, and multiplications of $G_M$ to the added results at calculating sections 564, 565 and 562 respectively. Further, the coil temperature calculating section performs a multiplication of the third term and a multiplication of the fourth term which are common to the expressions 82 to 84 at calculating sections 567 and 568 respectively, and an addition of the multiplied results at an adding section 576. To the above-mentioned results, the coil temperature calculating section performs additions of the expression 82 at adding sections 573 and 577, additions of the expression 83 at adding sections 574 and 578, and additions of the expression 84 at adding sections 575 and 579. Outputs from the adding sections 577, 578 and 579 become the coil temperatures $T_U$, $T_V$ and $T_W$ respectively.

Comparing operations of estimation of the coil temperature in the sixth embodiment with those in the fifth embodiment, only the above operation of the coil temperature calculating section is different, and the other operations are the same.

In the fifth and sixth embodiments, though the coil temperature calculating section performs the calculations with the configuration shown in FIG. 22 or FIG. 24, it may perform them with a program in a CPU. Though the present embodiments target the three-phase motor, the embodiments can be applied to a motor where the number of phases is other than three. The number of systems is not also limited to two, and the embodiments can be applied to a motor consisting of three or more systems. In the case of three or more systems, the gain β used to calculate the calorific value when the abnormality occurs, is adjusted in accordance with the number of normal systems.

In the above embodiments (the first to the sixth embodiments), although the current control section performs the two-phase/three-phase transformation from the dq-rotary coordinate system to the UVW-fixed coordinate system with respect to the current command value, the current control section may perform it with respect to the voltage command value. In this case, a three-phase/two-phase transforming section is needed that transforms the three-phase motor current fed back from the motor driving section and the three-phase detected motor current value detected by the abnormality detecting circuit into two-phase currents in the dq-rotary coordinate system respectively, and the abnormality detecting section detects the abnormality by comparing the two-phase detected motor current value with the two-phase current command value. Further, although the present embodiments deal with the failure of the inverter in the motor driving section as the detected failure, the embodiments can be applied to the case where the motor winding fails. Furthermore, though the star-connection is used as the method of connecting the coils, a delta-connection may be used.

A seventh embodiment of the present invention will be described.

Although the three-phase motor has two-system motor windings in the above first to sixth embodiments, the present embodiment supposes that a motor winding is configured of one system, and an influence to the coil temperature by the heating from the control substrate is small and negligible.

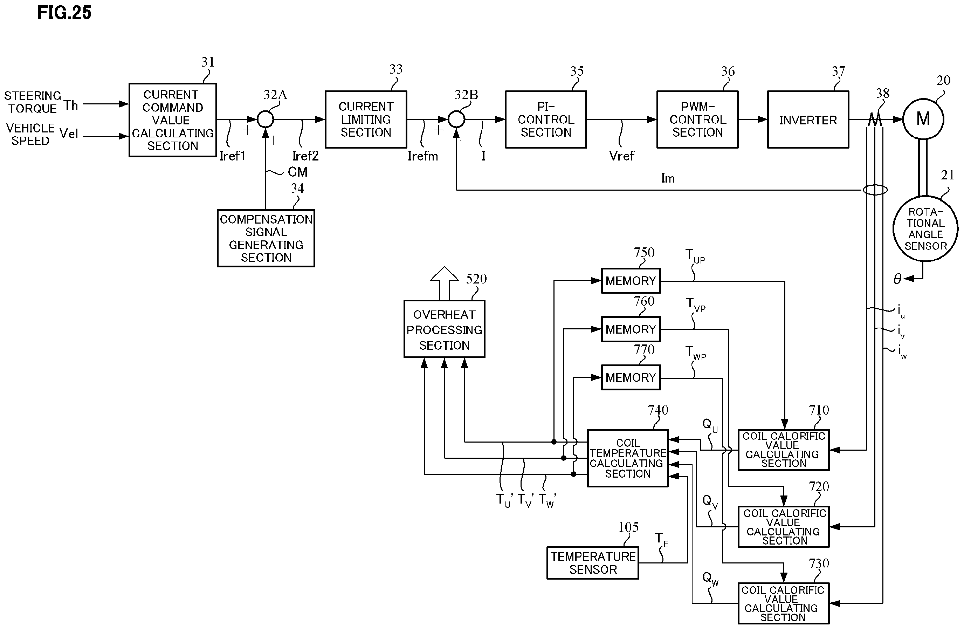

A configuration example of the seventh embodiment is shown in FIG. 25 corresponding to FIG. 2. The same configurations are designated with the same numerals, and the explanation is omitted. Since the temperature sensor 105 and the overheat processing section 520 are the same as those in the fifth embodiment, the explanation is omitted.

In FIG. 25, a motor current detector 38 detects a motor current Im of a motor 20. Since the motor 20 of the present embodiment is the three-phase motor, the U-phase motor current $i_u$, the V-phase motor current $i_v$ and the W-phase motor current $i_w$, which are motor currents of respective phases, are detected, and these motor currents of three phases are fed back as the motor current Im. The U-phase motor current $i_u$, the V-phase motor current $i_v$ and the W-phase motor current $i_w$ are inputted into coil calorific value calculating sections 710, 720 and 730 respectively.

As with the coil calorific value calculating sections 512, 513 and 514 in the fifth embodiment, the coil calorific value calculating sections 710, 720 and 730 respectively calculate the calorific values (the coil calorific values) $Q_U$, $Q_V$ and $Q_W$ of coils in respective phases. Since the motor winding of the present embodiment is configured of one system, the coil resistance is not obtained by integrating systems, but is a coil resistance of each phase as it is. By using such a coil resistance, as the coil calorific value calculating section of the fifth embodiment performs at the normal time, the coil calorific value calculating sections 710, 720 and 730 calculate the coil calorific values $Q_U$, $Q_V$ and $Q_W$ in accordance with the following expressions 85 to 87.

[Expression 85]

$$Q_U = R_U(T_U) \times i_u(t)^2$$

[Expression 86]

$$Q_V = R_V(T_V) \times i_v(t)^2$$

[Expression 87]

$$Q_W = R_W(T_W) \times i_w(t)^2$$

Moreover, as with the fifth embodiment, the coil resistances $R_U(T)$, $R_V(T)$ and $R_W(T)$ in the case that the coil temperature is T, can be calculated in accordance with the following expressions 88 to 90, so that the calorific values $Q_U$, $Q_V$ and $Q_W$ can be calculated in accordance with the following expressions 91 to 93 by substituting the expressions 88 to 90 for the expressions 85 to 87 respectively.

[Expression 88]

$$R_U(T) = R_{U0} \times \left\{1 + \alpha_U \times (T - T_b)\right\}$$

[Expression 89]

$$R_V(T) = R_{V0} \times \left\{1 + \alpha_V \times (T - T_b)\right\}$$

[Expression 90]

$$R_W(T) = R_{W0} \times \left\{1 + \alpha_W \times (T - T_b)\right\}$$

[Expression 91]

$$Q_U = R_{U0} \times \left\{1 + \alpha_U \times (T_U - T_b)\right\} \times i_u(t)^2$$

[Expression 92]

$$Q_V = R_{V0} \times \left\{1 + \alpha_V \times (T_V - T_b)\right\} \times i_v(t)^2$$

[Expression 93]

$$Q_W = R_{W0} \times \left\{1 + \alpha_W \times (T_W - T_b)\right\} \times i_w(t)^2$$

The coil calorific value calculating sections 710, 720 and 730 calculate the calorific values $Q_U$, $Q_V$ and $Q_W$ by using the above expressions 91 to 93 respectively.

A coil temperature calculating section 740 calculates coil temperatures $T_U{'}$, $T_V{'}$ and $T_W{'}$ in respective phases from the calorific values $Q_U$, $Q_V$ and $Q_W$ and the substrate temperature $T_E$. Derivation of expressions to calculate them will be described.

Transfer functions from the calorific values $Q_U$, $Q_V$ and $Q_W$ and the outside air temperature $T_0$ to the coil temperatures $T_U$, $T_V$ and $T_W$ in respective phases and the substrate temperature $T_E$ can be expressed by the following expressions 94 to 97.

[Expression 94]

$$T_U = G_{UU}(s)Q_U + G_{VU}(s)Q_V + G_{WU}(s)Q_W + G_{0U}(s)T_0$$

[Expression 95]

$$T_V = G_{UV}(s)Q_U + G_{VV}(s)Q_V + G_{WV}(s)Q_W + G_{0V}(s)T_0$$

[Expression 96]

$$T_W = G_{UW}(s)Q_U + G_{VW}(s)Q_V + G_{WW}(s)Q_W + G_{0W}(s)T_0$$

Expression 97]

$$T_W = G_{UW}(s)Q_U + G_{VW}(s)Q_V + G_{WW}(s)Q_W + G_{0W}(s)T_0$$

Here, $G_{XY}(s)$ is a frequency characteristic (a calorific value frequency characteristic) from a calorific value $Q_X$ to a coil temperature $T_Y$ in a Y-phase (X is any of U, V and W, and Y is any of U, V, W and E), $G_{0Y}$ is a frequency characteristic (an outside air temperature frequency characteristic) from the outside air temperature $T_0$ to a coil temperature $T_Y$ in a Y-phase (Y is any of U, V, W and E), and the control substrate is regarded as an E-phase to simplify the explanation. In the case that a relationship between a group of the calorific value and the outside air temperature and the temperature (the coil temperature or the substrate temperature) in each phase is approximately a linear combination, the above frequency characteristic is defined as a transfer function having a predetermined value.

The following expressions 98 to 100 are obtained by solving the above expression 97 for $T_0$, substituting the result for the above expressions 94 to 96, and arranging the substituted results (hereinafter, "(s)" is omitted to make the expression easy to see by simplification).

[Expression 98]

$$T_U = G_{UU}'Q_U + G_{VU}'Q_V + G_{WU}'Q_W + G_{TU}T_E$$

[Expression 99]

$$T_V = G_{UV}'Q_U + G_{VV}'Q_V + G_{WV}'Q_W + G_{TV}T_E$$

[Expression 100]

$$T_V = G_{UV}'Q_U + G_{VV}'Q_V + G_{WV}'Q_W + G_{TV}T_E$$

Here, $G_{TB} = G_{0B} / G_{0E}$, and $G_{AB}' = G_{AB} - G_{TB}G_{AE}$ (A and B are any of U, V and W) .

As described above, since the control substrate has heating corresponding to standby power such as feeble heating of a semiconductor switching element and heating caused by operations of a microcomputer or other semiconductors without a current passing through the coil in a state where an ignition is turned on, additional coil temperatures have been obtained in advance as $T_{U0}$, $T_{V0}$ and $T_{W0}$, and the coil temperature calculating section 740 adds the additional coil temperatures to the coil temperatures estimated in accordance with the above expressions 98 to 100 respectively as shown in the following expression 101 to 103, and calculates the coil temperature $T_U'$, $T_V'$ and $T_W'$.

[Expression 101]

$$T_U' = G_{UU}'Q_U + G_{VU}'Q_V + G_{WU}'Q_W + G_{TU}T_E + T_{U0}$$

[Expression 102]

$$T_V{}' = G_{UV}{}'Q_U + G_{VV}{}'Q_V + G_{WV}{}'Q_W + G_{TV}T_E + T_{V0}$$

[Expression 103]

$$T_W{}' = G_{UW}{}'Q_U + G_{VW}{}'Q_V + G_{WW}{}'Q_W + G_{TW}T_E + T_{W0}$$

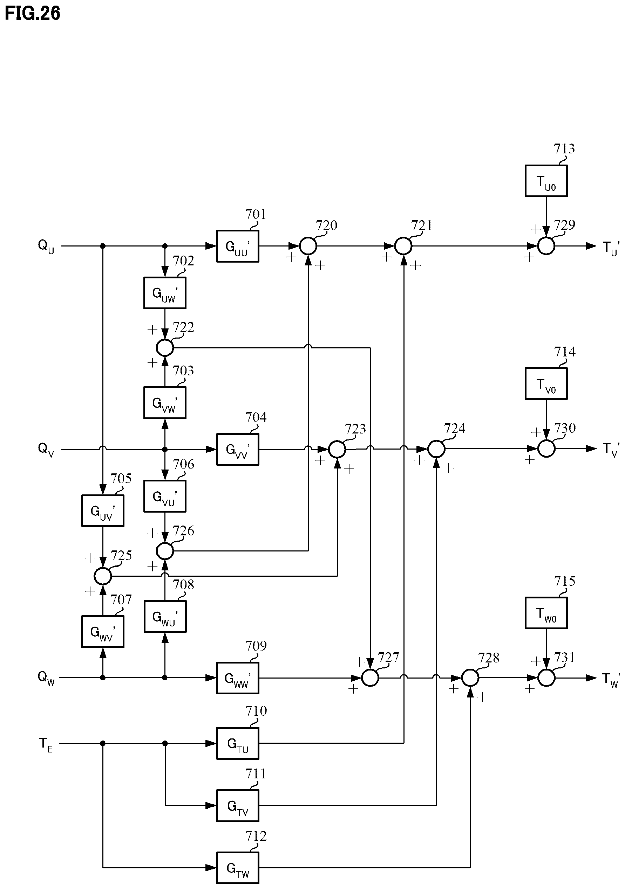

FIG. 26 expresses the above expressions 101 to 103 with a block diagram. The coil temperature calculating section 740 calculates the coil temperatures $T_U{}'$, $T_V{}'$ and $T_W{}'$ from the calorific values $Q_U$, $Q_V$ and $Q_W$ and the substrate temperature $T_E$ in accordance with the configuration shown in FIG. 26. That is, the coil temperature calculating section 740 performs multiplications to the inputted coil calorific value $Q_U$ in the expressions 101 to 103 at calculating sections 701, 705 and 702, multiplications to the coil calorific value $Q_V$ in the expressions 101 to 103 at calculating sections 706, 704 and 703, multiplications to the coil calorific value $Q_W$ in the expressions 101 to 103 at calculating sections 708, 707 and 709, and multiplications to the substrate temperature $T_E$ in the expressions 101 to 103 at calculating sections 710, 711 and 712. To the results of the multiplications, the coil temperature calculating section 740 performs additions in the expression 101 at adding sections 720, 721 and 726, additions in the expression 102 at adding sections 723, 724 and 725, additions in the expression 103 at adding sections 722, 727 and 728, and additions of the additional coil temperatures $T_{U0}$, $T_{V0}$ and $T_{W0}$ at adding sections 729, 730 and 731 respectively. Outputs from the adding sections 729, 730 and 731 become the coil temperatures $T_U{}'$, $T_V{}'$ and $T_W{}'$ respectively.

The coil temperatures $T_U{}'$, $T_V{}'$ and $T_W{}'$ are inputted into the overheat processing section 520, and at the same time, are retained in memories 750, 760 and 770 respectively to be used for the next calculation of the calorific value at the coil calorific value calculating sections 710, 720 and 730.

A coil temperature estimating section comprises the above coil calorific value calculating sections 710, 720 and 730 and the coil temperature calculating section 740.

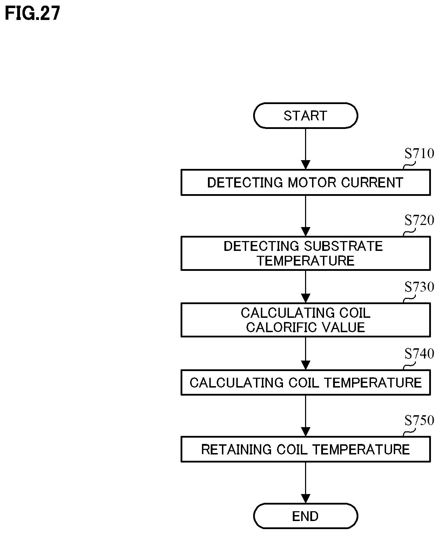

In such a configuration, an operating example of estimation of the coil temperature will be described with reference to a flowchart in FIG. 27.

The U-phase motor current $i_u$, the V-phase motor current $i_v$ and the W-phase motor current $i_w$ which are detected by the motor current detector 38 are inputted into the coil calorific value calculating sections 710, 720 and 730 respectively (Step S710). The temperature sensor 105 detects the temperature of the control substrate (Step S720), and outputs the substrate temperature $T_E$ to the coil temperature calculating section 740. Moreover, the detection of the motor current and the detection of the substrate temperature may interchange in order, or may be performed in parallel.

The coil calorific value calculating sections 710 calculates the coil calorific value $Q_U$ in the U-phase by using the U-phase motor current $i_u$ and the previously estimated coil temperature $T_{UP}$ retained in the memory 750 in accordance with the expression 91. Similarly, the coil calorific value calculating sections 720 calculates the coil calorific value $Q_V$ in the V-phase by using the V-phase motor current $i_v$ and the coil temperature $T_{VP}$ retained in the memory 760 in accordance with the expression 92, and the coil calorific value calculating sections 730 calculates the coil calorific value $Q_W$ in the W-phase by using the W-phase motor current $i_w$ and the coil temperature $T_{WP}$ retained in the memory 770 in accordance with the expression 93 (Step S730). The reference temperature $T_b$, the coil resistances $R_{U0}$, $R_{V0}$ and $R_{W0}$ at the reference temperature $T_b$ and the temperature coefficients $\alpha_U$, $\alpha_V$ and $\alpha_W$ are preset.

The calorific values $Q_U$, $Q_V$ and $Q_W$ are inputted into the coil temperature calculating section 740 with the substrate temperature $T_E$. The coil temperature calculating section 740 calculates the coil temperatures $T_U{}'$, $T_V{}'$ and $T_W{}'$ by the coil calorific values $Q_U$, $Q_V$ and $Q_W$ and the substrate temperature $T_E$ based on the expressions 101 to 103 (Step S740). The coil temperatures $T_U{}'$, $T_V{}'$ and $T_W{}'$ are inputted into the overheat processing section 520, and at the same time, are retained in the memories 750, 760 and 770 respectively (Step S750).

Moreover, it is possible to merge the coil calorific value calculating sections 710, 720 and 730, and calculate the calorific values $Q_U$, $Q_V$ and $Q_W$ in accordance with the expressions 91 to 93. Further, memories 750, 760 and 770 may be also merged, or a shared memory may be used.

An eighth embodiment of the present invention will be described.

Though a whole configuration of the eighth embodiment is similar to that of the seventh embodiment, a configuration of the coil temperature calculating section is different.

The setting shown by the following expression 104 can be applied to the expressions 98 to 100 which the calculation at the coil temperature calculating section 740 of the seventh embodiment is based on because of symmetry of the phases.

[Expression 104]

$$G_{UU}' = G_{VV}' = G_{WW}' = G_L$$
$$G_{UV}' = G_{VU}' = G_{UW}' = G_{WU}' = G_{VW}' = G_{WV}' = G_M$$
$$G_{TU} = G_{TV} = G_{TW} = G_{TE}$$

The following expressions 105 to 107 are obtained by substituting the above expression 104 for the expressions 98 to 100, and arranging the substituted results.

[Expression 105]

$$T_U = G_L Q_U + G_M \left( Q_V + Q_W \right) + G_{TE} T_E$$

[Expression 106]

$$T_V = G_L Q_V + G_M \left( Q_W + Q_U \right) + G_{TE} T_E$$

[Expression 107]

$$T_W = G_L Q_W + G_M \left( Q_U + Q_V \right) + G_{TE} T_E$$

The coil temperature calculating section calculates the coil temperatures $T_U'$, $T_V'$ and $T_W'$ by adding the additional coil temperatures $T_{U0}$, $T_{V0}$ and $T_{W0}$ to the coil temperatures estimated in accordance with the above expressions 105 to 107 as shown in the following expressions 108 to 110.

[Expression 108]

$$T_U' = G_L Q_U + G_M \left( Q_V + Q_W \right) + G_{TE} T_E + T_{U0}$$

[Expression 109]

$$T_V' = G_L Q_V + G_M \left( Q_W + Q_U \right) + G_{TE} T_E + T_{V0}$$

[Expression 110]

$$T_W' = G_L Q_W + G_M \left( Q_U + Q_V \right) + G_{TE} T_E + T_{W0}$$

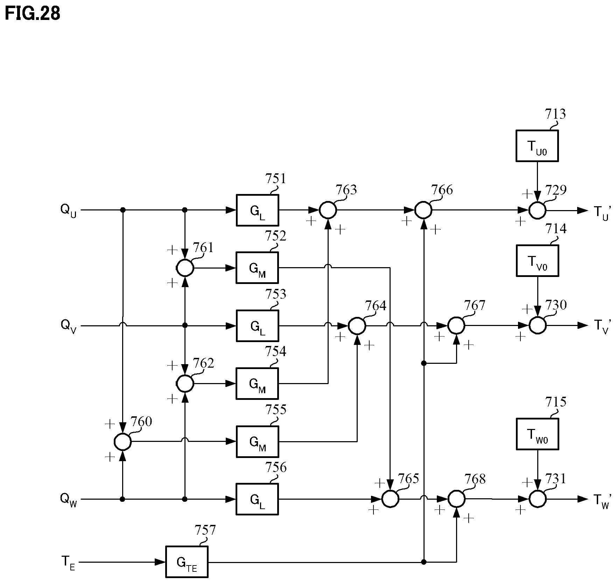

FIG. 28 expresses the above expressions 108 to 110 with a block diagram, and the coil temperature calculating section of the eighth embodiment calculates the coil temperatures $T_U'$, $T_V'$ and $T_W'$ from the calorific values $Q_U$, $Q_V$, $Q_W$ and the substrate temperature $T_E$ in accordance with the configuration shown in FIG. 28. That is, the coil temperature calculating section performs multiplications of $G_L$ to the coil calorific values $Q_U$, $Q_V$ and $Q_W$ at calculating sections 751, 753 and 756 respectively. The coil temperature calculating section performs additions shown in the parentheses of the expressions 108 to 110 at adding sections 762, 760 and 761 respectively, and multiplications of $G_M$ to the added results at calculating sections 754, 755 and 752 respectively. The coil temperature calculating section performs a multiplication of the third term which is common to the expressions 108 to 110 at calculating section 757. The coil temperature calculating section performs additions of the multiplied results at adding section 763 and 766 with respect to the expression 108, at adding section 764 and 767 with respect to the expression 109, and at adding section 765 and 768 with respect to the expression 110. Further, the coil temperature calculating section performs additions of the additional coil temperatures $T_{U0}$, $T_{V0}$ and $T_{W0}$ at the adding sections 729, 730 and 731 respectively. Outputs from the adding sections 729, 730 and 731 become the coil temperatures $T_U'$, $T_V'$ and $T_W'$ respectively.

Comparing operations of estimation of the coil temperature in the eighth embodiment with those in the seventh embodiment, only the above operation of the coil temperature calculating section is different, and the other operations are the same.

In the seventh and eighth embodiments, though the coil temperature calculating section performs the calculations with the configuration shown in FIG. 26 or FIG. 28, it may perform them with a program in a CPU. Though the embodiments target the three-phase motor, the embodiments can be applied to a motor where the number of phases is other than three.

Explanation of Reference Numerals

1 steering wheel
2 column shaft (steering shaft, handle shaft)
10 torque sensor
12 vehicle speed sensor
13, 103 battery
14 steering angle sensor
20 motor
21 rotational angle sensor
30 control unit (ECU)
31, 130 current command value calculating section
33, 150A, 150B current limiting section
35, 163A, 164A, 165A PI-control section
36 PWM-control section
37, 172A, 172B inverter
101 motor rotational angle detecting circuit
102 motor angular velocity calculating section
104 noise filter
110, 310, 510 coil temperature estimating section
111 motor current adjusting section
112A, 112B, 112C, 112D, 112E, 112F, 512, 513, 514, 710, 720, 730 coil calorific value calculating section
113, 515 substrate calorific value calculating section
114, 214, 314, 414, 516, 740 coil temperature calculating section
116, 316 outside air temperature estimating section
117, 217, 317, 417 transfer function matrix section
120, 520 overheat processing section
140 abnormality detecting section
160A, 160B current control section
161A dq-axis current command value calculating section
162A two-phase/three-phase transforming section
170A, 170B motor driving section
171A, 171B current detecting circuit
173A, 173B gate driving circuit
174A, 174B power source cut-off circuit
180A, 180B motor current cut-off circuit
181A, 181B abnormality detecting circuit
200 three-phase motor (two-system winding motor)
511 switching section

Claims

1. An electric power steering apparatus that comprises a control substrate that controls a poly-phase motor having two-system motor windings, comprising:

   a temperature sensor that detects a substrate temperature of said control substrate; and
   a coil temperature estimating section that estimates all coil temperatures by all motor currents of said poly-phase motor and said substrate temperature based on a heat transfer phenomenon between all coils that is caused by a difference in temperature between said all coils and a heat transfer phenomenon between said coil and said control substrate.

2. The electric power steering apparatus according to claim 1,
wherein said heat transfer phenomenon is expressed by a frequency characteristic.

3. The electric power steering apparatus according to claim 2,
wherein said coil temperature estimating section comprises:

a coil calorific value calculating section that obtains a coil calorific value of each phase in each system by said motor current; and
a coil temperature calculating section that obtains said coil temperature by said coil calorific value and said substrate temperature based on said frequency characteristic.

4. The electric power steering apparatus according to claim 3,
wherein said coil calorific value calculating section changes a coil resistance of each phase in each system, said coil resistance used to obtain said coil calorific value, depending on said coil temperature of a corresponding phase in a corresponding system.

5. The electric power steering apparatus according to claim 3 or 4,
wherein said frequency characteristic includes a calorific value frequency characteristic that is a frequency characteristic from said coil calorific value to said coil temperature or said substrate temperature, and an outside air temperature frequency characteristic that is a frequency characteristic from an outside air temperature to said coil temperature or said substrate temperature.

6. The electric power steering apparatus according to claim 5,
wherein said coil temperature calculating section defines said calorific value frequency characteristic and said outside air temperature frequency characteristic as a transfer function, and obtains said coil temperature by a linear combination of said coil calorific value and said outside air temperature or said substrate temperature.

7. The electric power steering apparatus according to claim 2,
wherein said coil temperature estimating section comprises:

a coil calorific value calculating section that obtains a coil calorific value of each phase in each system by said motor current;
a substrate calorific value calculating section that obtains a substrate calorific value of said control substrate by said motor current; and
a coil temperature calculating section that obtains said coil temperature by said coil calorific value, said substrate calorific value and said substrate temperature based on said frequency characteristic.

8. The electric power steering apparatus according to claim 7,
wherein said coil calorific value calculating section changes a coil resistance of each phase in each system, said coil resistance used to obtain said coil calorific value, depending on said coil temperature of a corresponding phase in a corresponding system; and
wherein said substrate calorific value calculating section changes a substrate resistance used to obtain said substrate calorific value, depending on said substrate temperature.

9. The electric power steering apparatus according to claim 7 or 8,
wherein said frequency characteristic includes a calorific value frequency characteristic that is a frequency characteristic from said coil calorific value or said substrate calorific value to said coil temperature or said substrate temperature, and an outside air temperature frequency characteristic that is a frequency characteristic from an outside air temperature to said coil temperature or said substrate temperature.

10. The electric power steering apparatus according to claim 9,
wherein said coil temperature calculating section defines said calorific value frequency characteristic and said outside air temperature frequency characteristic as a transfer function, and obtains said coil temperature by a linear combination of said coil calorific value, said substrate calorific value and said outside air temperature or said substrate temperature.

**11.** The electric power steering apparatus according to any one of claims 1 to 10, wherein said coil temperature estimating section estimates said coil temperature by setting all of said motor currents in an abnormal system to zero when an abnormality occurs in one of said systems

**12.** An electric power steering apparatus that comprises a control substrate that controls a poly-phase motor having multi-system motor windings, comprising:

a temperature sensor that detects a substrate temperature of said control substrate; and
a coil temperature estimating section that obtains a coil calorific value of each phase of said poly-phase motor and a substrate calorific value of said control substrate by a motor current of said each phase, and estimates a coil temperature of said each phase by said coil calorific value, said substrate calorific value and said substrate temperature based on a heat transfer phenomenon between said phases that is caused by a difference in temperature between coils of said phases and a heat transfer phenomenon between said coil and said control substrate;
wherein said coil temperature estimating section estimates said coil temperature by a corrected coil calorific value and a corrected substrate calorific value that are obtained by correcting said coil calorific value and said substrate calorific value that are obtained in a normal system, and said substrate temperature, when an abnormality occurs in one of systems.

**13.** The electric power steering apparatus according to claim 12, wherein said coil temperature estimating section obtains said corrected coil calorific value and said corrected substrate calorific value by multiplying said coil calorific value and said substrate calorific value by a gain.

**14.** The electric power steering apparatus according to claim 12 or 13, wherein said heat transfer phenomenon is expressed by a frequency characteristic.

**15.** The electric power steering apparatus according to claim 14, wherein said coil temperature estimating section comprises:

a coil calorific value calculating section that obtains said coil calorific value and said corrected coil calorific value by said motor current of said each phase;
a substrate calorific value calculating section that obtains said substrate calorific value and said corrected substrate calorific value by said motor current; and
a coil temperature calculating section that obtains said coil temperature by said coil calorific value and said substrate calorific value, or said corrected coil calorific value and said corrected substrate calorific value, and said substrate temperature, based on said frequency characteristic.

**16.** The electric power steering apparatus according to claim 15, wherein coil calorific value calculating section changes a coil resistance of said each phase used to obtain said coil calorific value, depending on said coil temperature of a corresponding phase; and
wherein said substrate calorific value calculating section changes a substrate resistance used to obtain said substrate calorific value, depending on said substrate temperature.

**17.** The electric power steering apparatus according to any one of claims 14 to 16, wherein said frequency characteristic includes a calorific value frequency characteristic that is a frequency characteristic from said coil calorific value or said substrate calorific value to said coil temperature or said substrate temperature, and an outside air temperature frequency characteristic that is a frequency characteristic from an outside air temperature to said coil temperature or said substrate temperature.

**18.** The electric power steering apparatus according to claim 17, wherein said coil temperature calculating section defines said calorific value frequency characteristic and said outside air temperature frequency characteristic as a transfer function, and obtains said coil temperature by a linear combination of said coil calorific value and said substrate calorific value, or said corrected coil calorific value and said corrected substrate calorific value, and said substrate temperature.

**19.** An electric power steering apparatus that comprises a control substrate that controls a poly-phase motor, comprising:

a temperature sensor that detects a substrate temperature of said control substrate; and
a coil temperature estimating section that estimates a coil temperature of each phase of said poly-phase motor by a motor current of said each phase and said substrate temperature based on a first heat transfer phenomenon between said phases that is caused by a difference in temperature between coils of said phases and a second heat transfer phenomenon from said coil to said control substrate.

20. The electric power steering apparatus according to claim 19,
wherein said first heat transfer phenomenon and said second heat transfer phenomenon are expressed by frequency characteristics.

21. The electric power steering apparatus according to claim 20,
wherein said coil temperature estimating section comprises:

a coil calorific value calculating section that obtains a coil calorific value of said each phase by said motor current; and
a coil temperature calculating section that obtains said coil temperature by said coil calorific value and said substrate temperature based on said frequency characteristic.

22. The electric power steering apparatus according to claim 21,
wherein said coil calorific value calculating section changes a coil resistance of said each phase used to obtain said coil calorific value, depending on said coil temperature of a corresponding phase.

23. The electric power steering apparatus according to claim 21 or 22,
wherein said frequency characteristic includes a calorific value frequency characteristic that is a frequency characteristic from said coil calorific value to said coil temperature or said substrate temperature, and an outside air temperature frequency characteristic that is a frequency characteristic from an outside air temperature to said coil temperature or said substrate temperature.

24. The electric power steering apparatus according to claim 23,
wherein said coil temperature calculating section defines said calorific value frequency characteristic and said outside air temperature frequency characteristic as a transfer function, and obtains said coil temperature by a linear combination of said coil calorific value and said substrate temperature.

**FIG.1**

**PRIOR ART**

**FIG.2**

**PRIOR ART**

**FIG.3**

**PRIOR ART**

**FIG.4**

FIG.5

**FIG.6**

FIG.7

FIG.8

FIG.9

## FIG.10A

## FIG.10B

**FIG.11**

**FIG.12**

COIL TEMPERATURE CALCULATING SECTION 114

**FIG.13**

```
                    ┌─────────────┐
                    │    START    │
                    └──────┬──────┘
                           │                    S10
                  ┌────────▼────────┐
                  │ CALCULATING CURRENT │
                  │  COMMAND VALUE   │
                  └────────┬────────┘
                           │                    S20
                  ┌────────▼────────┐
                  │ LIMITING CURRENT │
                  │ COMMAND VALUE #1 │
                  └────────┬────────┘
                           │                    S30
                  ┌────────▼────────┐
                  │ LIMITING CURRENT │
                  │ COMMAND VALUE #2 │
                  └────────┬────────┘
                           │                    S40
                  ┌────────▼────────┐
                  │ CALCULATING VOLTAGE │
                  │ COMMAND VALUE #1  │
                  └────────┬────────┘
                           │                    S50
                  ┌────────▼────────┐
                  │ CALCULATING VOLTAGE │
                  │ COMMAND VALUE #2  │
                  └────────┬────────┘
                           │                    S60
                  ┌────────▼────────┐
                  │    DETECTING    │    No
                  │   ABNORMALITY   ├──────┐
                  │ OF INVERTER 172A?│      │
                  └────────┬────────┘      │
                        Yes│          S70  │
                  ┌────────▼────────┐      │
                  │OUTPUTTING ABNORMAL SYSTEM│   │
                  │ CUT-OFF COMMAND SAa │    │
                  └────────┬────────┘      │
                           │◄──────────────┘
                           │                    S80
                  ┌────────▼────────┐
                  │    DETECTING    │    No
                  │   ABNORMALITY   ├──────┐
                  │ OF INVERTER 172B?│      │
                  └────────┬────────┘      │
                        Yes│          S90  │
                  ┌────────▼────────┐      │
                  │OUTPUTTING ABNORMAL SYSTEM│   │
                  │ CUT-OFF COMMAND SAb │    │
                  └────────┬────────┘      │
                           │◄──────────────┘
                           │                    S100
                  ┌────────▼────────┐
                  │   OUTPUTTING    │    No
                  │ABNORMAL SYSTEM CUT-├──────┐
                  │  OFF COMMAND?   │      │
                  └────────┬────────┘      │
                        Yes│          S110 │
                  ┌────────▼────────┐      │
                  │OUTPUTTING ABNORMAL│     │
                  │ DETECTION SIGNAL AD │    │
                  └────────┬────────┘      │
                           │◄──────────────┘
                           │                    S120
                  ┌────────▼────────┐
                  │ ESTIMATING COIL TEMPERATURE │
                  └────────┬────────┘
                           │                    S130
                  ┌────────▼────────┐
                  │   OVERHEATING   │    No
                  │     STATE?      ├──────┐
                  └────────┬────────┘      │
                        Yes│          S140 │
                  ┌────────▼────────┐      │
                  │ PROCESSING FOR  │      │
                  │OVERHEAT PROTECTION│     │
                  └────────┬────────┘      │
                           │◄──────────────┘
                    ┌──────▼──────┐
                    │   RETURN    │
                    └─────────────┘
```

48

FIG.14

```
        ┌────────────────────────┐
        │   START OF CALCULATING  │
        │  VOLTAGE COMMAND VALUE  │
        └────────────────────────┘
                    │            S210
                    ▼
        ┌────────────────────────┐
        │  CALCULATING d-AXIS/q-AXIS │
        │   CURRENT COMMAND VALUES   │
        └────────────────────────┘
                    │            S220
                    ▼
        ┌────────────────────────┐
        │   TRANSFORMING CURRENT   │
        │      COMMAND VALUE :     │
        │  TWO-PHASE→THREE-PHASE   │
        └────────────────────────┘
                    │            S230
                    ▼
        ┌────────────────────────┐
        │   CALCULATING DEVIATION  │
        └────────────────────────┘
                    │            S240
                    ▼
        ┌────────────────────────┐
        │   CALCULATING VOLTAGE    │
        │      COMMAND VALUE       │
        └────────────────────────┘
                    │
                    ▼
        ┌────────────────────────┐
        │    END OF CALCULATING    │
        │  VOLTAGE COMMAND VALUE   │
        └────────────────────────┘
```

**FIG.15**

START OF ESTIMATING COIL
TEMPERATURE

S310
INPUTTING
ABNORMAL DETECTION
SIGNAL?

No → S320

Yes →

S330
ABNORMAL
DETECTION
SIGNAL?

OUTPUTTING MOTOR
CURRENT AS IT IS

ABNORMAL DETECTION
SIGNAL="1"
S340

ABNORMAL DETECTION
SIGNAL="2"
S350

ABNORMAL
DETECTION
SIGNAL="3"
S360

MOTOR CURRENT OF
FIRST SYSTEM = 0

MOTOR CURRENT OF
SECOND SYSTEM = 0

WARNING

S370
DETECTING SUBSTRATE
TEMPERATURE

S380
CALCULATING COIL
CALORIFIC VALUE $Q_{U1}$

S390
CALCULATING COIL
CALORIFIC VALUE $Q_{V1}$

S400
CALCULATING COIL
CALORIFIC VALUE $Q_{W1}$

S410
CALCULATING COIL
CALORIFIC VALUE $Q_{U2}$

S420
CALCULATING COIL
CALORIFIC VALUE $Q_{V2}$

S430
CALCULATING COIL
CALORIFIC VALUE $Q_{W2}$

S440
CALCULATING SUBSTRATE
CALORIFIC VALUE

S450
ESTIMATING OUTSIDE AIR
TEMPERATURE

S460
CALCULATING COIL
TEMPERATURE

S470
ADDING ADDITIONAL COIL
TEMPERATURE

S480
RETAINING COIL
TEMPERATURE

END OF ESTIMATING
COIL TEMPERATURE

**FIG.16**

COIL TEMPERATURE CALCULATING SECTION 214

**FIG.17**

FIG.18

COIL TEMPERATURE CALCULATING SECTION 314

118A 118B 118C 118D 118E 118F

$T_{U10}$ $T_{V10}$ $T_{W10}$ $T_{U20}$ $T_{V20}$ $T_{W20}$

$Q_{U1}$
$Q_{V1}$
$Q_{W1}$
$Q_{U2}$
$Q_{V2}$
$Q_{W2}$

317

TRANSFER FUNCTION MATRIX SECTION

$T_{U1}$ + 119A $T_{U1}'$
$T_{V1}$ + + 119B $T_{V1}'$
$T_{W1}$ + + 119C $T_{W1}'$
$T_{U2}$ + + 119D $T_{U2}'$
$T_{V2}$ + + 119E $T_{V2}'$
$T_{W2}$ + + 119F $T_{W2}'$

316

OUTSIDE AIR TEMPERA-TURE ESTIMA-TING SECTION $T_0$

$T_E$

53

**FIG.19**

COIL TEMPERATURE CALCULATING SECTION $\overset{414}{\diagup}$

118A 118B 118C 118D 118E 118F

$T_{U10}$ | $T_{V10}$ | $T_{W10}$ | $T_{U20}$ | $T_{V20}$ | $T_{W20}$

417

$Q_{U1}$
$Q_{V1}$
$Q_{W1}$
$Q_{U2}$
$Q_{V2}$
$Q_{W2}$
$T_E$

TRANSFER FUNCTION MATRIX SECTION

$T_{U1}$ + 119A
$T_{V1}$ + 119B
$T_{W1}$ + 119C
$T_{U2}$ + 119D
$T_{V2}$ + 119E
$T_{W2}$ + 119F

$T_{U1}'$
$T_{V1}'$
$T_{W1}'$
$T_{U2}'$
$T_{V2}'$
$T_{W2}'$

**FIG.20**

FIG.21

**FIG.22**

**FIG.23**

```
        ┌──────────────────────────┐
        │   START OF ESTIMATING    │
        │    COIL TEMPERATURE      │
        └──────────────────────────┘
                    │
                    ▼          S510
              ╱─────────────╲
             ╱   INPUTTING   ╲
            ╱ ABNORMAL DETECTION╲──── Yes ──────────┐
            ╲     SIGNAL?     ╱                       │
             ╲───────────────╱                        ▼          S530
                    │                            ╱──────────╲
                   No                           ╱  ABNORMAL  ╲
                    │          S520            ╱   DETECTION   ╲
                    ▼                          ╲    SIGNAL?    ╱
        ┌──────────────────────┐               ╲─────────────╱
        │  MOTOR CURRENT OF    │        ┌──────────┼───────────────┬──────────────────┐
        │    FIRST SYSTEM      │  ABNORMAL DETECTION   ABNORMAL DETECTION   ABNORMAL
        └──────────────────────┘  SIGNAL="1"          SIGNAL="2"          DETECTION
                    │                  │   S540           │   S550        SIGNAL="3"
                    │                  ▼                  ▼                    │  S560
                    │        ┌──────────────────┐ ┌──────────────────┐        ▼
                    │        │ MOTOR CURRENT OF │ │ MOTOR CURRENT OF │ ┌──────────────┐
                    │        │  SECOND SYSTEM   │ │   FIRST SYSTEM   │ │   WARNING    │
                    │        └──────────────────┘ └──────────────────┘ └──────────────┘
                    │◄──────────────┘──────────────────┘
                    │          S570
                    ▼
        ┌──────────────────────┐
        │ DETECTING SUBSTRATE  │
        │    TEMPERATURE       │
        └──────────────────────┘
                    │          S580
                    ▼
        ┌──────────────────────┐
        │ CALCULATING U-PHASE COIL │
        │    CALORIFIC VALUE   │
        └──────────────────────┘
                    │          S590
                    ▼
        ┌──────────────────────┐
        │ CALCULATING V-PHASE COIL │
        │    CALORIFIC VALUE   │
        └──────────────────────┘
                    │          S600
                    ▼
        ┌──────────────────────┐
        │ CALCULATING W-PHASE COIL │
        │    CALORIFIC VALUE   │
        └──────────────────────┘
                    │          S610
                    ▼
        ┌──────────────────────┐
        │ CALCULATING SUBSTRATE │
        │   CALORIFIC VALUE    │
        └──────────────────────┘
                    │          S620
                    ▼
        ┌──────────────────────┐
        │  CALCULATING COIL    │
        │    TEMPERATURE       │
        └──────────────────────┘
                    │          S630
                    ▼
        ┌──────────────────────┐
        │   RETAINING COIL     │
        │    TEMPERATURE       │
        └──────────────────────┘
                    │
                    ▼
        ┌──────────────────────────┐
        │    END OF ESTIMATING     │
        │    COIL TEMPERATURE      │
        └──────────────────────────┘
```

**FIG.24**

# FIG.25

EP 3 540 937 A1

FIG.26

FIG.27

```
                    ┌─────────────┐
                    │    START    │
                    └──────┬──────┘
                           │              S710
                           ▼
              ┌────────────────────────────┐
              │   DETECTING MOTOR CURRENT   │
              └────────────┬───────────────┘
                           │              S720
                           ▼
              ┌────────────────────────────┐
              │     DETECTING SUBSTRATE     │
              │        TEMPERATURE          │
              └────────────┬───────────────┘
                           │              S730
                           ▼
              ┌────────────────────────────┐
              │     CALCULATING COIL        │
              │      CALORIFIC VALUE        │
              └────────────┬───────────────┘
                           │              S740
                           ▼
              ┌────────────────────────────┐
              │  CALCULATING COIL TEMPERATURE │
              └────────────┬───────────────┘
                           │              S750
                           ▼
              ┌────────────────────────────┐
              │   RETAINING COIL TEMPERATURE │
              └────────────┬───────────────┘
                           │
                           ▼
                    ┌─────────────┐
                    │     END     │
                    └─────────────┘
```

**FIG.28**

<div style="text-align:center">

**INTERNATIONAL SEARCH REPORT**

</div>

| | International application No. |
| --- | --- |
| | PCT/JP2017/040264 |

**A. CLASSIFICATION OF SUBJECT MATTER**
Int.Cl. H02P29/64(2016.01)i, B62D5/04(2006.01)i, B62D6/00(2006.01)i,
H02P25/22(2006.01)i, H02P27/08(2006.01)i, H02P29/028(2016.01)i,
H02P29/68(2016.01)i
According to International Patent Classification (IPC) or to both national classification and IPC

**B. FIELDS SEARCHED**

Minimum documentation searched (classification system followed by classification symbols)
Int.Cl. H02P29/64, B62D5/04, B62D6/00, H02P25/22, H02P27/08, H02P29/028,
H02P29/68

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-89531 A (NSK LTD.) 23 April 2009, paragraphs [0003]-[0006], [0011]-[0012], [0022]-[0041], [0045], fig. 1-8 (Family: none) | 1-24 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 11 January 2018 (11.01.2018) | 23 January 2018 (23.01.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2017/040264 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-134869 A (DELPHI TECHNOLOGIES, INC.) 09 May 2003, paragraphs [0016]-[0075], fig. 1-10 & JP 2003-70278 A & JP 2003-70285 A & JP 2003-116291 A & US 2003/0076065 A1, paragraphs [0026]-[0073], fig. 1-10 & US 2003/0071594 A1 & US 2003/0076061 A1 & US 2003/0076064 A1 & US 2007/0132446 A1 & EP 1284541 A2 & EP 1285841 A1 & EP 1286145 A1 & EP 1286456 A1 | 1-24 |
| Y | JP 2016-152682 A (DENSO CORP.) 22 August 2016, paragraphs [0007]-[0048], fig. 1-4 & US 2016/0241182 A1, paragraphs [0022]-[0115], fig. 1-4 & DE 102016202405 A1 | 1-24 |
| Y | JP 2016-181963 A (NSK LTD.) 13 October 2016, paragraphs [0009]-[0011], [0036], [0039]-[0043], fig. 6-10 & WO 2016/152523 A1 & EP 3242393 A1, paragraphs [0009]-[0011], [0037], [0040]-[0044], fig. 7-1 | 11-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5211618 B
- JP 4483298 B
- JP 5282376 B
- JP 4356295 B